# EUROPEAN PATENT APPLICATION

(11) **EP 4 679 203 A1**
(43) Date of publication of application: **14.01.2026**
(21) Application number: 23925809.8
(22) Date of filing: 17.03.2023
(51) Int. Cl.: G05B 19/042, G05B 23/02, G01R 31/28

(54) **TESTING SYSTEM**

(30) Priority: 06.03.2023 CN 202310214698
(71) Applicant: Kunyi Electronics Technology (Shanghai) Co., Ltd., Shanghai 201403 (CN)
(72) Inventor: LI, Kang, Shanghai 201403 (CN); CHEN, Qi, Shanghai 201403 (CN); CHEN, Zhongming, Shanghai 201403 (CN)
(74) Representative: Herrero & Asociados, S.L.
(86) International application number: PCT/CN2023/082188
(87) International publication number: WO 2024/183093

(57) **Abstract**

A testing system, which relates to the technical field of testing. The testing system comprises: an industrial-personal-computer pool, at least one I/O control module, and an I/O pool, wherein the industrial-personal-computer pool comprises a plurality of industrial-personal-computers; the I/O pool comprises at least one I/O unit; the I/O control module is used to transmit target data between K industrial-personal-computers in the industrial-personal-computer pool and L I/O units in the I/O pool, K and L each being any integer greater than or equal to 1; and the I/O unit is used to transmit the target data or data obtained on the basis of the target data between the I/O control module and DUTs. The industrial-personal-computers in the industrial-personal-computer pool and the I/O unit in the I/O pool can be scaled out based on demand, such that the full utilization of resources, such as the industrial-personal-computers and the I/O unit, can be ensured.

## Description

### Technical Field

This application relates to the field of testing technology, and specifically to a testing system.

### Background

In vehicles such as automobiles and new energy vehicles, the electronic and electrical architecture of the vehicle is becoming more and more complex. Compared with previous systems, there is an order of magnitude change in the number of electronic control units (ECUs), data bandwidth, and processing capabilities of CPUs and GPUs.

Hardware-in-the-Loop (HIL) testing can verify the functions of various domain controllers, ECUs, CPUs and other controllers in the vehicle in advance to shorten the development cycle of the controllers.

In the existing HIL testing system, the industrial-personal-computer (i.e., Real-time Parameter Controls, RTPC) and I/O card in the HIL testing system are used to execute testing tasks to complete the test of the device under testing (DUT). Generally speaking, there is only one industrial-personal-computer (IPC), and all I/O cards need to communicate with this industrial-personal-computer. However, as the testing requirements become more and more diverse and complex, a single industrial-personal-computer can no longer meet the testing requirements. Based on the above technical problems, the applicant proposed the technical solution of this application.

### Summary of The Invention

The purpose of this application is to provide a testing system, wherein through the pooling of industrial-personal-computers and I/O units, and adopting a plurality of industrial-personal-computers, compared with the method of only using a single industrial-personal-computer, the present application can effectively cover more diverse and complex testing requirements. On this basis, the present application also uses the control module to realize the interaction of target data based on the data transmission relationship between the industrial-personal-computers and the I/O units. In the case of using multiple industrial-personal-computers, it ensures the effective and accurate data interaction between the industrial-personal-computers and DUTs.

In order to achieve the above purpose, this application provides a testing system, comprising: an industrial-personal-computer pool, at least one I/O control module and an I/O pool; the industrial-personal-computer pool comprises a plurality of industrial-personal-computers, the I/O pool comprises at least one I/O unit; the I/O control module is used to transmit target data between K industrial-personal-computers in the industrial-personal-computer pool and L I/O units in the I/O pool; K and L are any integer greater than or equal to 1; the I/O unit is used to transmit the target data or the data obtained based on the target data between the I/O control module and DUTs.

### Description of The Drawings

FIG.1 is a block diagram of a testing system according to the first embodiment of the present application, in which the testing system includes a cluster control module;
FIG.2 is a block diagram of a testing system according to the first embodiment of the present application, in which any industrial-personal-computer is configured to include a cluster control module;
FIG.3 is a schematic diagram of the testing system being a HIL system according to the second embodiment of the present application, in which there are a plurality of I/O control modules, and each I/O control module and the corresponding I/O unit are connected in cascade;
FIG.4 is a block diagram of the testing system being a HIL system according to the second embodiment of the present application, in which there are a plurality of I/O control modules, and each I/O control module is directly connected to the corresponding I/O unit;
FIG.5 is a schematic block diagram of a testing system according to the third embodiment of the present application;
FIG.6 is a schematic diagram of a star connection between an industrial-personal-computer and an I/O control module according to the third embodiment of the present application;
FIG.7 is a schematic diagram of a testing system according to the third embodiment of the present application, in which the memory operating unit includes: at least one shared memory unit and a memory control unit;
FIG.8 is a schematic diagram of a star connection between an industrial-personal-computer and an I/O control module according to the third embodiment of the present application, in which the memory control unit includes: at least one first signal transceiver, an instruction encoding and decoding logic module, and an access arbitration module and memory controller, the shared memory unit includes: an interface controller and two second signal transceivers;
FIG.9 is a schematic diagram of the testing system being a HIL system according to the third embodiment of the present application, in which there are a plurality of I/O control modules, and each I/O control module and the corresponding I/O unit are connected in cascade;
FIG.10 is a schematic diagram of the testing system being a HIL system according to the third embodiment of the present application, in which there are a plurality of I/O control modules, and each I/O control module is directly connected to the corresponding I/O unit;
FIG.11 is a block diagram of a testing system according to the fourth embodiment of the present application;
FIG.12 is a block diagram of a testing system according to the fourth embodiment of the present application, in which each distributed memory unit includes a target memory and a memory synchronization unit;
FIG.13 is a schematic diagram of three industrial-personal-computers and I/O control modules being connected in cascade through four distributed memory units according to the fourth embodiment of the present application;
FIG.14 is a schematic diagram of data synchronization between a plurality of distributed memory units cascaded in FIG.13;
FIG.15 is a block diagram of a distributed memory unit according to the fourth embodiment of the present application;
FIG.16 is a block diagram of the testing system being a HIL system according to the fourth embodiment of the present application, in which there are a plurality of I/O control modules, and each I/O control module and the corresponding I/O unit are connected in cascade;
FIG.17 is a block diagram of the testing system being a HIL system according to the fourth embodiment of the present application, in which there are a plurality of I/O control modules, and each I/O control module is directly connected to the corresponding I/O unit.

### Detailed Description of Embodiments

Each embodiment of the present application will be described in detail in the following in connection with the accompanying drawings, so that the purposes, features and advantages of the present application can be more clearly understood. The embodiments shown in the accompanying drawings are not intended to be a limitation of the scope of the present application but are merely intended to illustrate the substantive spirit of the technical solution of the present application.
In the following description, for the purpose of explaining the various disclosed embodiments, certain specific details are set forth to provide a thorough understanding of the various disclosed embodiments. However, one skilled in the relevant art will recognize that the embodiments may be practiced without one or more of these specific details. In other instances, well-known devices, structures, and techniques associated with the present application may not be shown or described in detail to avoid unnecessarily obscuring the description of the embodiments.

Unless the context requires otherwise, throughout the specification and claims, the word "comprises" and variations thereof, such as "includes" and "has" should be understood in an open, inclusive sense, that is, to mean "includes, but not limited to".

Reference throughout this specification to "one embodiment" or "an embodiment" means that a particular feature, structure, or characteristic described in connection with the embodiment is included in at least one embodiment. Thus, the appearances of "in one embodiment" or "in an embodiment" in various places throughout this specification are not necessarily all referring to the same embodiment. Additionally, specific features, structures, or characteristics may be combined in any manner in one or more embodiments.

As used in this specification and the appended claims, the singular forms "a," "an" and "" include plural referents unless the context clearly dictates otherwise. It should be noted that the term "or" is generally used in its sense including "or/and" unless the context clearly dictates otherwise.

In the following description, in order to clearly demonstrate the structure and working mode of this application, many directional words will be used to describe it, but "front", "back", "left", "right", "outside", "inside" should be used.", "outward", "inward", "up", "down" and other words are to be understood as convenient terms and should not be understood as limiting terms.

The first embodiment of the present application relates to a testing system, which is a HIL (hardware-in-the-loop testing) system, and can be used to test ECUs, domain controllers and other DUTs in vehicles (including but not limited to new energy vehicles, fuel vehicles, etc.), for example the common DUTs of vehicles are vehicle controllers, battery management system controllers, electric drive controllers, body controllers, chassis suspension controllers, assisted driving controllers, etc., and the testing items include but are not limited to many operation stability testing, control algorithm testing, etc. under various scenarios.

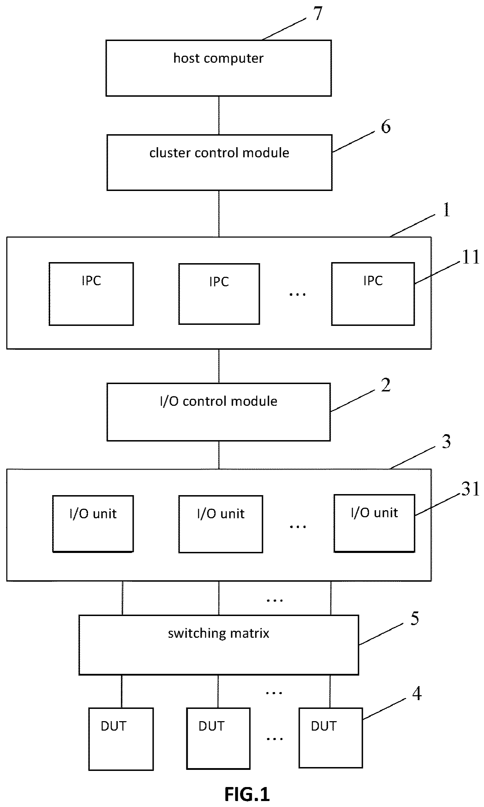

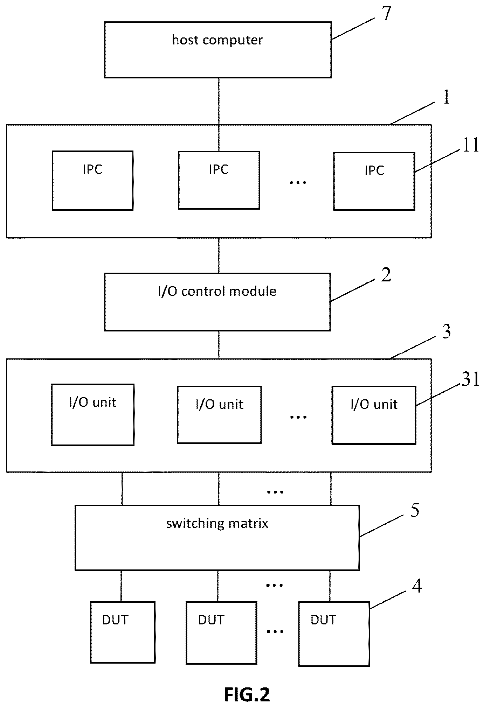

Referring to FIG.1 and FIG.2, the testing system comprises: an industrial-personal-computer (IPC) pool 1, an I/O control module 2 and an I/O pool 3, wherein the industrial-personal-computer pool 1 and the I/O pool 3 can be installed in the same cabinet or in different cabinets. Specifically, the industrial-personal-computer pool 1 may comprise a plurality of industrial-personal-computers 11, the number of which can be fixed or scalable. The industrial-personal-computers 11 in the industrial-personal-computer pool 1 can be located in the same cabinet or in different cabinets, the I/O pool 3 may include at least one I/O unit 31, the number of which may be fixed or scalable. The I/O units 31 in the I/O pool 3 may be located in the same cabinet or in different cabinets.

In one example, the industrial-personal-computer pool 1 includes a configurable number of at least one industrial-personal-computer 11 (Real-time Parameter Controls, RTPC), that is, the number of industrial-personal-computers 11 in the industrial-personal-computer pool 1 is scalable, and their number can be configured based on demand. For example, there are a preset number of interfaces in the industrial control cabinet used to set up the industrial-personal-computer 1. The industrial-personal-computer 11 can be detachably installed and connected to the interfaces in the industrial control cabinet, so that the number of the industrial-personal-computers 11 in the industrial control cabinet can be configured based on demand. The industrial-personal-computers 11 connected to the interface of the industrial control cabinet form an industrial-personal-computer pool 1. Wherein the industrial-personal-computers 11 in the industrial-personal-computer pool 1 are communicatively connected with each other, and each industrial-personal-computer 11 includes one or more CPUs.

As automobile functions become increasingly complex, data bandwidth becomes larger and larger (camera, lidar), CPU processing capacity has exceeded 50,000 DMIPS, and Al computing capacity has even reached 1,000 TOPS, the traditional isolated single industrial-personal-computer can no longer meet this testing requirement, only through clustering and "pooling" more computing resources, CPU resources and bus bandwidth can the resource bottleneck of simulation be solved. The use of the industrial-personal-computer pool in the above solution can effectively solve the problem of resource bottlenecks, and the solution in this specification can be applied here to ensure that the test runs efficiently and effectively while solving the resource bottleneck.

In one example, the I/O pool 3 includes a configurable number of at least one I/O unit 31, that is, the number of I/O units 31 in the I/O pool 3 is scalable, and their number can be adjusted based on demand, site, cost, etc., for example, there are a preset number of interfaces in the I/O cabinet used to set up the I/O unit 31, and the I/O unit 31 is detachably installed and connected to the interfaces in the I/O cabinet, so that the number of I/O units 31 in the I/O cabinet can be configured based on demand, cost, etc., and the I/O units 31 connected to the I/O cabinet interface form an I/O pool 3; in one example, the I/O Unit 31 is an I/O card, which can be directly plugged into the interface in the I/O cabinet.

The I/O control module 2 is communicatively connected to the industrial-personal-computer 11 in the industrial-personal-computer pool 1, and the I/O control module 2 is also communicatively connected to the I/O units 31 in the I/O pool 3 respectively. For example, the control module 2 and the I/O units 31 are connected to the same EtherCAT network, wherein the I/O unit 31 and the control module 2 are connected in cascade and communicate based on the EtherCAT, the EtherCAT can basically meet the low latency requirement. In addition, the I/O unit 31 can also be plugged into the I/O control module 2, for example, the I/O unit 31 is connected to the I/O control module 2 through a data bus (such as a PCIe bus) and the like of the I/O control module 2. Wherein, the I/O control module 2 may be a computer including an I/O controller.

The number of the I/O control module 2 may be one, and the I/O control module 2 can be directly connected to all I/O units 31 or cascaded with all I/O units 31. The number of I/O control modules 2 is also multiple, and each I/O control module 2 is connected to the corresponding multiple I/O units 31, the I/O control modules 2 can also be connected to the same Ethernet network with the cluster control module, and then exchange information with the cluster control module (for example, feeding back data transmission relationship).

In this embodiment, the I/O units 31 are connected to the corresponding DUTs 4, and the number of the DUTs 4 may be one or more. Wherein the I/O units 31 can be directly connected to the corresponding DUT 4, that is, the DUT 4 is directly connected to the ports of the I/O units 31 through a connector to realize signal transmission; different I/O units 31 can be connected to different pins of the DUT 4 to transmit different information, if a plurality of DUTs 4 are tested in a cluster at the same time, each I/O unit 31 is connected to the same pins of the DUTs 4 to transmit the same information.

In one example, the testing system further includes: a switching matrix 5 connected between the I/O unit 31 and the DUT 4, that is, the I/O units 31 are indirectly connected to the corresponding DUTs 4 through the switching matrix 5. The switching matrix 5 includes: at least one first port and at least one second port; the first ports are connected to the I/O units 31 respectively, and the second ports are connected to the DUTs 4 respectively. Switchable connection channels are provided inside the switching matrix 5, and the connection channels can connect the first ports and the second ports on both sides of the switching matrix 5, so that the I/O units 31 can be connected to the corresponding DUTs 4 through the configuration of the connection channels inside the switching matrix 5; wherein, different connection channels in the switching matrix 5 can be used to transmit different signals, and an Ethernet module can also be provided inside the switching matrix 5 to realize the exchange of digital signals. It can be seen from this that in order to realize the corresponding communication among the industrial-personal-computer 11, the I/O unit 31 and the DUT 4 and realize the transmission of the target data, when the switching matrix is provided, not only need to configure the switching matrix, but also need to configure the data transmission relationship of I/O control module 2, so that the data transmission required for testing between the industrial-personal-computer 11 and the DUT 4 is realized, for example, the data transmission between the ports of the simulation model in the industrial-personal-computer 11 and the ports of the DUT 4. In this mode, the connection mode when the DUT 4 is connected is more flexible, only the switching matrix 5 need to be configured according to the actual access situation. For example, after configuring the I/O control module 2, if the switching matrix is not set up in the testing system, it is necessary to find out which I/O units 31 the DUT 4 should be connected to and how to connect based on the configuration results, when the switching matrix 5 is set up in the testing system, it may be more free to connect the DUT 4 to Switch Matrix 5, and then only need to configure the Switch Matrix 5 to achieve the data transmission required for testing.

The industrial-personal-computer 11 may be understood as part or all of the real-time simulation machine RTPC in the HIL system.

The I/O unit 31 may be understood as an input/output unit. Specifically, it may be understood that the I/O unit 31 can realize data input and/or output with respect to the DUT 4, and/or can realize data input and/or output with respect to the industrial-personal-computer 11;
wherein the data A input and/or output by the I/O unit 31 with respect to the DUT 4 and the data B input and/or output by the I/O unit with respect to the industrial-personal-computer 11 may be related or unrelated. Specifically, data A and data B may be different forms of data with the same content, for example, a digital signal with a certain content is received from the industrial-personal-computer 11 and an analog signal with the same content is sent to the DUT 4, or vice versa, for another example, the signal before injecting the fault is received from the industrial-personal-computer 11, and the signal after injecting the fault by the I/O unit 31 is sent to the DUT 4;
Data A and data B can also be data with the same content and the same form;
Data A and data B can also be data with different contents, for example, data A and data B are a trigger signal that trigger the I/O unit 31 to generate a certain Sign1 signal and the Sign1 signal respectively; for another example, the I/O unit 31 can simulate the Sign2 signal that needs to be sent to the DUT 4 only when obtain a certain condition signal from the industrial-personal-computer, at this time, the condition signal and the Sign2 signal are data A and data B respectively.

In addition, the I/O unit 31 may refer to a circuit, a circuit board, or a device including a circuit board and other assemblies.

In one example, the I/O unit 31 may not only interact with the industrial-personal-computer 11 via the control module 4, but also interact with the DUT 4 (such as a vehicle controller) directly or via the switching matrix 5. And the interaction may be unidirectional or bidirectional.

The I/O unit 31 may only implement input and/or output functions, in some examples, may also process the transmitted signals during input and output process, such as signal conversion, fault simulation, information simulation, signal generation, and on/off control etc. It can be seen that as long as the signal interaction between the industrial-personal-computer 11 and the DUT 4 can be realized, it can be used as an implementation method of the I/O unit 31 regardless of whether other functions are integrated.

The I/O unit 31 may be an I/O card, for example, a card that supports at least one of the following functions: digital signal input, analog signal input, digital signal output, analog signal output, PWM signal input, PWM signal output, high-side power output and low-side power output. Wherein, collection and output of the high-speed signal can be further realized, additionally, card resources can be flexibly configured based on demand, and the card accuracy and sampling frequency indicators brought by this technology have reached the industry-leading level.

The I/O cards include at least one of the following: AD PWM-IN card, DAC card, FIU card, PWM-OUT card, RELAY-IO card, RC card, PSIS&DSI3&SENT card, Multi-bus cards (Flexray/CANFD/LIN), Eth (Ethernet in vehicle) cards, etc.

The I/O card may also be, for example, at least one of the following dedicated cards: current output card, thermocouple card, battery simulator, temperature simulator, motor card, and IO_HUB card.

In this embodiment, the I/O control module 2 is used to transmit target data between the K industrial-personal-computers 11 in the industrial-personal-computer pool 1 and the L I/O units 31 in the I/O pool 3; K and L are both any integers greater than or equal to 1.

Any data that can be transmitted between the industrial-personal-computer 11 and the I/O unit 31 may be understood as the target data.

In specific examples, corresponding to the above I/O card, the target data may include at least one of the following: downlink information generated by the industrial-personal-computer 11 that needs to be sent to the DUT 4; and uplink information derived from the DUT 4 that needs to be sent to the industrial-personal-computer.

Further, based on the diversity of I/O card functions, the target data may also include at least one of the following: the downlink information generated by the industrial-personal-computer 11 that needs to be sent to the I/O unit 31 for processing; and the uplink information generated by the I/O unit 31 that needs to be sent to the industrial-personal-computer 11.

Further, the I/O control module 2 is used to transmit data between K industrial-personal-computers 11 in the industrial-personal-computer pool 1 and L I/O units 31 in the I/O pool 3 based on data transmission relationship between the K industrial-personal-computers 11 and L I/O units 31; K and L are both any integers greater than or equal to 1.

The data transmission relationship can be understood as: it can at least indicate: a relationship that allows the transmission of data between one or more industrial-personal-computers 11 and one or more I/O units 31, that is, it can at least determine the range of the industrial-personal-computer 11 and I/O unit 31 that are allowed to transmit data.

In one example, the data transmission relationship can further determine which I/O unit 31 the data transmitted from the industrial-personal-computer 11 should be synchronized to, and which industrial-personal-computer 11 the data transmitted from the I/O unit 31 should be synchronized to, that is, the mapping relationship between the industrial-personal-computer 11 and the I/O unit 31 is defined in detail, furthermore, the mapping relationship between the ports of the industrial-personal-computer 11 and the ports of the I/O units 31 can also be defined in detail; then, the I/O control module 2 can transmit the data that is transmitted based on this mapping relationship; therefore, when the mapping relationship is described, the industrial-personal-computer 11 and I/O unit 31 that allow transmission can be represented.

In another example, the data transmission relationship is mainly used to delimit the range of industrial-personal-computers 11 and I/O units 31 that are allowed to transmit data, as for each time data is transmitted, which I/O unit 31, DUT 4 and the port (the I/O unit 31 or the port of the DUT 4) the industrial-personal-computer 11 will transmit data to, and which industrial-personal-computer 11 or which port of the industrial-personal-computer 11 the data transmitted from the I/O unit 31 should be transmitted to, can be auxiliarily determined by other means. For example, a corresponding identifier can be carried during the transmission process, and the I/O control module 2 can determine whether the data transmission relationship is satisfied based on the carried identifier, and if so, then the transmission is performed.

In addition, if there are a plurality of I/O control modules 2 and different control modules 2 are connected to different I/O units 31, in one example, the data transmission relationship obtained and used by the I/O control module 2 may be a partial data transmission relationship, that is, corresponding to the secondary data transmission relationship of the I/O unit 31 connected to the I/O control module 2, thus the secondary data transmission relationship can be understood as: at least used to determine the range of the industrial-personal-computer 11 and I/O units 31 that are allowed to transmit data in the industrial-personal-computer 11 and the I/O units 31 connected to the I/O control module 2. In a further example, the mapped port can be determined in the industrial-personal-computer 22 and the I/O unit 31 connected to the I/O control module 2.

The data transmission relationships received by different I/O control modules 2 can be partial data transmission relationships, that is, secondary data transmission relationships, and different secondary data transmission relationships. Of course, all data transmission relationships can also be sent to all I/O control modules 2, that is, the data transmission relationships received by different I/O control modules 2 can also be the same.

The ports involved may refer to hardware ports, software ports, port addresses, etc. (for example, a certain output port or input port of a certain model running in the industrial-personal-computer 11).

The I/O control module 2 can obtain part or all of the data transmission relationships or other information used to determine the data transmission relationships from the cluster control module, this process can be obtained via Ethernet, for example.

In addition, at the same time, the I/O units 31 connected to a single I/O control module 2 may all be used for the same testing task, or part of them may be used for one testing task and the other part may be used for another testing task. The I/O control module 2 can obtain the required data transmission relationships separately or together.

Wherein, the downlink information generated by the industrial-personal-computer 11 that needs to be sent to the DUT 4 includes but is not limited to: test instructions that need to be run in the DUT 4, test signals generated by the simulation model of the industrial-personal-computer 11 running tests or generated by the simulation card connected to the industrial-personal-computer 11 (the test signals are related to the DUT 4 and the test scene, such as the signal of the current environmental scene of the vehicle, the in-car environment signal, the simulated traffic and crowd image signal, etc.); the uplink information sent by the DUT 4 to the industrial-personal-computer 11 includes but is not limited to: the feedback signal generated by the DUT 4 based on the downlink information sent by the industrial-personal-computer 11, and its own operating status information of the DUT 4 during testing ( such as clock signal, supply voltage, temperature signal, load ratio, etc.).

The I/O unit 31 is used to transmit target data between the I/O control module 2 and the DUT 4, and can also be used to process the target data.

Specifically, K industrial-personal-computers 11 in the industrial-personal-computer pool 1 and L I/O units 31 in the I/O pool 3 are used to test the DUT 4, and the L I/O units 31 are connected to the DUT 4; for example, the data transmission relationship defines the flow direction of target data between the industrial-personal-computer 11 and the I/O units 31, that is, after the uplink information derived from the DUT 4 or the I/O unit that needs to be sent to the industrial-personal-computer 11 is transmitted to the I/O units 31, the I/O units 31 sends the uplink information to the I/O control module 2, this data transmission relationship determines the industrial-personal-computer 11 (or its port) that the I/O control module 2 needs to send the uplink information derived from the I/O units 31 to; and after the downlink information generated by the industrial-personal-computer 11 that needs to be sent to the DUTs 4 or the I/O units 31 is transmitted to the I/O control module 2, the data transmission relationship determines that the I/O control module 2 sends the downlink information derived from the industrial-personal-computers 11 to the DUTs 4 or the I/O units 31, wherein the DUTs 4 can receive different information through different pins.

When testing the DUTs 4, the industrial-personal-computers 11 can conduct a complete testing on the DUTs 4 respectively, or the K industrial-personal-computers 11 can cooperate to test the DUT 4, and each testing part can be performed by one or more industrial-personal-computers 11, for example, different simulation models are run in the industrial-personal-computers 11, and each industrial-personal-computer 11 can receive the uplink information derived from the DUTs 4 or the I/O units 31; and/or, the test signals generated by other industrial-personal-computers 11 running the corresponding simulation models, and generate the test signals that need to be sent to other industrial-personal-computers 11 and/or the downlink information that need to be sent to the DUTs 4 or the I/O units 31.

In one example, the computer where the industrial-personal-computers 11 are located and the computer where the I/O control module 2 is located can be communicatively connected through the Ethernet, both the industrial-personal-computer 11 and the I/O control module 2 are equipped with network protocols implemented by software, the computer that sends the data encapsulates the data into the network protocol through software and transmits it to other computers, the software of the computer receiving the data receives the network message, extracts the data from the network message and then uses it, thus the I/O control module 2 can exchange and share target data between the K industrial-personal-computers 11 and the L I/O units 31 based on Ethernet, which has the advantages of low cost and easy implementation.

In this embodiment, the cluster control module in the testing system can determine the data transmission relationship between the K industrial-personal-computers 11 in the industrial-personal-computer pool 1 and the L I/O units 31 in the I/O pool 3 that execute the current first testing task. Wherein, the number of the cluster control module may be one or more; each testing task can test one or more DUTs of the same type, a first DUT tested by the first testing task is the DUT 4 in FIG.1, the number of the first DUT may be one or more.

Specifically, for the first testing task currently to be executed, the cluster control module can firstly delimit K industrial-personal-computers 11 for executing the first testing task from the industrial-personal-computer pool 1, and delimit L I/O units 31 for executing the first testing task from the I/O pool 3, that is, the K industrial-personal-computers 11 and L I/O units 31 for executing the first testing task are obtained, and then data transmission relationship between the K industrial-personal-computers 11 and the L I/O units 31 is established. Wherein, if the industrial-personal-computers 11 in the industrial-personal-computer pool 1 and/or the I/O units 31 in the I/O pool 3 has insufficient resources, scale-out can also be performed accordingly.

The cluster control module can send the data transmission relationship to the K industrial-personal-computers 11 respectively after determining the data transmission relationship between the K industrial-personal-computers 11 and the L I/O units 31; when the industrial-personal-computers 11 needs to send the downlink information to the first DUT, based on the data transmission relationship, the I/O unit 31 for receiving the downlink information is designated, and then the I/O control module 2 send the downlink information through the designated I/O units 31 to the first DUT. In addition, when the first DUT needs to send the uplink information to the industrial-personal-computers 11, the I/O control module 2 receives the uplink information through the L I/O units 31, and the I/O units 31 can mark the I/O units 31 that send the uplink information, whereby the industrial-personal-computers 11 receive the uplink information derived from the designated I/O unit 31 based on the above-mentioned data transmission relationship.

Alternatively, the cluster control module can feed back the data transmission relationship to the I/O control module 2 after determining the data transmission relationship between the K industrial-personal-computers 11 and the L I/O units 31 (this will be explained later as an example, but not limited to this); when the industrial-personal-computers 11 need to send the downlink information to the first DUT, it directly sends the downlink information to the I/O control module 2, and the I/O control module 2 sends the downlink information to the first DUT through the designated I/O units 31 based on the data transmission relationship. In the same way, when the first DUT needs to send uplink information to the industrial-personal-computer 11, the I/O control module 2 receives the uplink information through the L I/O units 31, based on the above data transmission relationship, the I/O control module 2 send the uplink information derived from the I/O units 31 to the designated industrial-personal-computer 11.

In addition, the delimited L I/O units 31 are configured to communicatively connect with the first DUT, for example, after the L I/O units 31 are delimited, the L I/O units 31 are directly connected to the respective first DUTs, or a switching matrix 5 is connected between the I/O units 31 and the first DUTs, and the cluster control module configures a first port of the switching matrix 5 connected to the L I/O units and a second port connected to the first DUTs to form a connection channel therebetween, and communication connections between the L I/O units 31 and the first DUTs are established, so that the switching matrix 5 can transmit the target data between the L I/O units 31 and the first DUTs through the configured connection channel.

The cluster control module is also used to send the task information of the first testing task to the K industrial-personal-computers 11, so that the industrial-personal-computers 11 can generate the downlink information to be sent to the first DUT based on the task information of the first testing task. Wherein, the task information of the first testing task includes the simulation model, test parameters, test cases and other required for testing.

In this embodiment, the cluster control module can be set up in the testing system in the following two methods, specifically as follows:
Method 1: referring to FIG.1, the testing system further includes: a cluster control module 6; the cluster control module 6 is communicatively connected to the industrial-personal-computers 11. The cluster control module 6 may be a computer including a cluster controller, and the computer is communicatively connected to the industrial-personal-computers 11 through wired or wireless way.

In addition, the cluster control module 6 may be communicatively connected to the host computer 7 through wired or wireless way. The host computer 7 can generate a first testing task based on the user's configuration, and distribute the task information of the generated first testing task to the corresponding K industrial-personal-computers 11.

In one example, the cluster control module 6, the industrial-personal-computer 11 and the I/O control module 2 are communicatively connected through Ethernet, that is, the computer where the cluster control module 6 is located, the industrial-personal-computers 11 and the computer where the I/O control module 2 are located are communicatively connected through Ethernet, this can meet the communication needs of the three parties, for example, the cluster control module 6 can send the above-mentioned data transmission relationship to the industrial-personal-computer 11 and/or the I/O control module 2 through Ethernet.

Method 2: Referring to FIG.2, any one of the industrial-personal-computers 11 included in the testing system is configured as a cluster control module. The industrial-personal-computer 11 configured as a cluster control module can be connected to the host computer 7, and the host computer 7 can generate a first testing task based on the user's configuration, and send the generated first testing task to the industrial-personal-computer 11 configured as a cluster control module. The industrial-personal-computer 11 distributes the task information of the first testing task to the corresponding K industrial-personal-computers 11. Wherein, the module configured as a cluster control module can be used only to implement the functions of the cluster controller, but is not limited to this, and can also be used to function as the cluster controller and test the DUT at the same time.

It should be noted that only one host computer 7 is schematically shown in FIGS. 1 and 2, and the number of host computers 7 may also be multiple.

In this embodiment, the scalability of industrial-personal-computers and I/O units is achieved through the pooling of industrial-personal-computers and I/O units, so that the industrial-personal-computers in the industrial-personal-computer pool and the I/O units in the I/O pool can be scaled out based on demand, ensuring the full utilization of resources such as the industrial-personal-computers and the I/O units and avoiding the waste of test resources.

The second embodiment of the present application relates to a testing system. Compared with the first embodiment, the main improvement of this embodiment is that in this embodiment, the K industrial-personal-computers 11 and L I/O units 31 required for executing the first testing task can be delimited based on the testing requirements of the first testing task.

The cluster control module 6 is also used to determine the testing requirement information of the first testing task, which is at least used to characterize the quantity information of the CPU and the quantity information of the I/O units 31 required for executing the first testing task. Wherein, the quantity information is a quantity value or a quantity range; in addition, the testing requirement information may also include the memory, the occupied space of the memory and other required for testing, that is, when selecting the CPU and I/O unit 31, it is also necessary to consider whether the memory and the occupied space of the memory that they can use meet the testing requirements.

In a specific example, the testing requirement information can also be used to characterize the information about the quantity and/or type of memory, GPU, bus interface, sensor interface, simulation card and other required.

In another specific example, the testing requirement information can also be used to characterize various information such as various parameters of the CPU, the models, brands and attributes of GPU, memory and other, etc.

The method of the cluster control module 6 determining the testing requirement information of the first testing task includes but not limited to the following:
In one example, the cluster control module 6 is used to determine the quantity information of the CPU and the quantity information of the I/O units required for executing the first testing task according to the task information of the first testing task, and obtain the testing requirement information; for example, based on the task information of the first testing task, estimate the resource consumption of executing the first testing task, thereby determining the testing requirement information of the first testing task; or based on the task information of the first testing task, query the test history data, and search the testing requirement information of the same first testing task previously executed from the test history data as the testing requirement information of the first testing task. Wherein the task information includes at least one or any combination of the following: test cases, testing simulation models, and test parameters.

In one example, the cluster control module 6 is used to obtain the number N of CPUs and the number L of I/O units required for executing the first testing task from the setting parameters of the received first testing task, the setting parameters include: the quantity information of CPUs and the quantity information of I/O units required for executing the first testing task. For example, the cluster control module 6 is connected to the host computer 7, and the user can configure the setting parameters for each first testing task in the host computer 7, and send the setting parameters configuring the first testing task to the cluster control module 6, thus the cluster control module 6 can obtain the testing requirement information of the first testing task from the set parameters, that is, the set parameters can be designated by the user.

In one example, the cluster control module 6 performs a pre-test based on the received task information of the first testing task, and determines the testing requirement information of the first testing task based on the test situation of the pre-test process. For example, one or more testing simulation models are selected from the task information of the first testing task, the pre-test is to test the simulation model, one industrial-personal-computer 11 is selected from the industrial-personal-computer pool 1 to run the simulation model, and one I/O unit 31 is selected from the I/O pool 3 to perform pre-testing together with the selected industrial-personal-computer 11, the testing information are obtained during the pre-test process, and the testing requirement information of the first testing task is determined based on the testing information, the testing information includes any one or any combination of the following: test time, operating status of the industrial-personal-computer 11, operating status of the I/O unit 31, etc., wherein the operating status includes but is not limited to: CPU occupancy, memory occupancy, etc. Alternatively, the pre-test is to use all or a designated number of industrial-personal-computers 11 currently in idle state and all or a designated number of I/O units 31 currently in idle state to execute the first testing task within a certain period of time, and then obtain the testing information of the test process, and determine the testing requirement information of the first testing task based on the testing information.

The cluster control module 6 is used to select N CPUs from the CPUs currently in the idle state and L I/O units 31 from the I/O units 31 currently in the idle state based on the testing requirement information, where N is any integer greater than or equal to 1. Wherein the idle state refers to that there is currently no first testing task being executed or to be executed. In addition, the cluster control module 6 will also determine the newly scaled industrial-personal-computer 11 in the industrial-personal-computer pool 1 and the newly scaled I/O units 31 in the I/O pool 3 detected to be in idle state.

Taking N CPUs from the idle CPUs currently in idle state as an example, the cluster control module 6 can read the quantity information of the CPUs required for executing the first testing task from the testing requirement information of the first testing task, if the quantity information is a quantity value, it is possible to directly select the CPUs of the quantity value from the CPUs in idle state, or select N CPUs larger than the quantity value from the CPUs in idle state; if the quantity information is a quantity range, it is possible to obtain the number of the CPUs in idle state firstly, if the number of the CPUs in idle state is greater than or equal to the lower limit of the quantity range, it is possible to select a quantity value within the quantity range, the selected quantity value is less than or equal to the number of the CPUs in idle state, and then select CPUs of the quantity value from the CPUs in idle state; for example, on the premise of ensuring that the quantity value selected from the quantity range is less than or equal to the number of the CPUs in idle state, it is prior to select the largest quantity value, whereby a larger number of CPUs can be selected to execute the first testing task, providing certain redundant processing capabilities.

Wherein each of the K industrial-personal-computers 11 includes at least one CPU among the N CPUs. In one example, when selecting N CPUs from the CPUs currently in the idle state, it is possible to selected the CPU from one industrial-personal-computer 11 firstly, when there is no CPU in the idle state in the single industrial-personal-computer 11, if the N CPUs are still not selected, and then select CPUs from the next industrial-personal-computer 11 until N CPUs are selected.

The specific method of selecting L I/O units 31 from the I/O units 31 currently in the idle state is similar to the aforementioned method of selecting the CPU, and will not be described again here.

In addition, if the testing requirement information can also include the memory and the occupied space of the memory required for testing, then when selecting the CPU and the I/O unit 31, it is also possible to refer to the memory and the occupied space of the memory required for testing, that is, it is necessary to ensure that the selected CPU and I/O unit 31 meet the requirements for the memory and the occupied space of the memory.

When the cluster control module 6 determines the testing requirement information of the first testing task, it is equivalent to determine a test container to execute the first testing task, the test container characterizes the quantity information of the CPU and the quantity information of the I/ O units 31 required for executing the first testing task, and can also characterize other contents of the testing requirement information mentioned above.

After selecting the N CPUs and the L I/O units 31 based on the above process, it is possible to determine at least one first target industrial-personal-computer and L I/O units 31 corresponding to the test container, the first target industrial-personal-computer is the industrial-personal-computers 11 containing the selected CPUs, the number of which is K, the test container is used to execute the above-mentioned first testing task to test the first DUT, so as to enable interaction between the first DUT and the N CPUs through L I/O units 31. Subsequently, the cluster control module 6 can determine the data transmission relationship between the selected CPUs of the K first target industrial-personal-computers and the L I/O units 31 in the test container, and feed back the data transmission relationship to the I/O Control module 2.

The cluster control module 6 is also used to use the N CPUs and L I/O units 31 to execute a first testing task to test the first DUT, and after the first testing task is completed, release the N CPUs and L I/O units 31 executing the first testing task, so that the released CPUs and I/O units 31 restore the idle state.

Specifically, the cluster control module 6 uses the N CPUs and L I/O units 31 selected from the K first target industrial-personal-computers corresponding to the test container to execute the first testing task to test the first DUT, during testing, the industrial-personal-computers 11 use the selected CPUs included to execute the corresponding testing part, the CPUs used for testing in the first target industrial-personal-computers can generate an downlink information that needs to be sent to the first DUT, and send the downlink information to the I/O control module 2, based on the data transmission relationship, the I/O control module 2 sends the downlink information of CPUs to the first DUT through the designated I/O unit 31. During testing, the first DUT can generate a uplink information that needs to be sent to the first target industrial-personal-computer, the I/O control module 2 receives the uplink information through L I/O units 31, and the I/O control module 2 sends the uplink information derived from the I/O units 31 to the CPU of the designated first target industrial-personal-computer based on the above-mentioned data transmission relationship.

When the test container is used to execute the first testing task, for example, after the preset test time is reached or the preset number of cycles is met, the cluster control module 6 releases N CPUs of the K first target industrial-personal-computers and L I/O units 31 corresponding to the test container that executes the first testing task, the released CPUs and I/O units 31 all restore the idle state.

In this embodiment, the cluster control module 6 is also used to: before the execution of the first testing task is completed, based on the testing requirement information of another second testing task, use J CPUs among the CPUs of a plurality of industrial-personal-computers 11 and a plurality of M I/O units 31 in the I/O unit 31 to execute the second testing task to test another second DUT, so as to enable interaction between the second DUT and the J CPUs through M I/O Units 31; J and M are any integers greater than or equal to 1; wherein, the J CPUs and the N CPUs are different CPUs among the CPUs of the plurality of industrial-personal-computers, and the L I/O units 31 and the M I/O units are different I/O units among the plurality of I/O units 31 .
And/Or:
After releasing the N CPUs and L I/O units 31 executing the first testing task, based on the testing requirement information of another third testing task, Z CPUs are selected from the CPUs currently in the idle state, and T I/O units 31 are selected from the I/O units 31 currently in the idle state, and the Z CPUs and T I/O units 31 are used to execute the third testing task to test the third DUT, so as to enable interaction between the third DUT and the Z CPUs through the T I/O units 31; Z and T are any integers greater than or equal to 1; wherein the Z CPUs and N CPUs have overlapping CPUs, and/or: the L I/O units 31 and the T I/O units 31 have overlapping I/O units 31.

Wherein, the second DUT tested by the second testing task and the third DUT tested by the third testing task are both the DUT 4 in FIG.1.

Specifically, the number of testing tasks to be executed is multiple, a plurality of testing tasks may be tested for the same type of DUT 4, or they may be tested for different types of DUT 4, and the plurality of testing tasks are arranged in sequence in the task queue, the cluster control module 6 sequentially configures the corresponding test containers based on the order of the testing tasks to be executed in the task queue. After the cluster control module 6 determines the N CPUs and L I/O units 31corresponding to the test container corresponding to the current first testing task based on the aforementioned process, immediately the N CPUs and L I/O units 31 can be used to execute the first testing task to test the first DUT.

In one example, if during the execution of the first testing task, there are still testing tasks to be executed in the task queue, another testing task in the task queue, that is, the second testing task, is obtained; if the CPU currently in the idle state and the I/O unit 31 currently in the idle state meet the testing requirements of the second testing task, based on the testing requirement information of the second testing task, J CPUs and M I/O units 31 in the plurality of I/O units 31 corresponding to the test container of the second testing task are determined, and the J CPUs and M I/O units 31 are used to execute the second testing task to test another second DUT, so as to enable interaction between the second DUT and the J CPUs through the M I/O units 31; both J and M are any integers greater than or equal to 1. Wherein, the J CPUs and N CPUs are different CPUs among the CPUs of the plurality of industrial-personal-computers 11, and the L I/O units 31 and M I/O units 31 are different I/O units among the plurality of I/O units 31, that is, during the execution of the first testing task, the CPU and I/O unit 31 that are not involved in executing the first testing task can be selected to execute another second testing task, that is, a plurality of testing tasks can be executed in parallel. Among them, a plurality of CPUs included in a single industrial-personal-computer 11 can be divided into a plurality of test containers at the same time for executing different testing tasks in parallel.

Wherein the second testing task is another testing task different from the first testing task, and the second DUT is another DUT different from the first DUT. The first testing task and the second testing task may be for the same user, or may be for different users. The process of determining the CPU and I/O unit 31 and performing the test for the second testing task can be understood with reference to the relevant descriptions of other embodiments of this specification, and will not be described again here.

It can be seen that during the execution of the first testing task, other testing tasks can also be executed in parallel, effectively ensuring efficient execution of the test.

In another example, after the first testing task is executed and the N CPUs and L I/O units executing the first testing task are released, there are still testing tasks to be executed in the task queue, and another testing task in the task queue, that is a third testing task, is obtained, based on the testing requirement information of another third testing task, Z CPUs are selected from the CPUs currently in the idle state, and T I/O unit 31 are selected from the I/O units 31 currently in the idle state, the Z CPUs and T I/O units 31 are used to execute the third testing task to test the third DUT, as to enable interaction between the third DUT and the Z CPUs through the T I/O units 31; Z and T are any integers greater than or equal to 1; wherein the Z CPUs and the N CPUs have overlapping CPUs, and/or: the L I/O units 31 and the T I/O units have overlapping I/O units 31; that is, the released CPU and I/O unit 31 can be used to execute other testing tasks.

Wherein the third testing task is another testing task different from the first testing task, and the third DUT may be the first DUT, or may be another DUT different from the first DUT. The first testing task and the third testing task may be for the same user, or may be for different users. The process of determining the CPU and I/O units and performing testing for the third testing task can be understood with reference to the relevant descriptions of other embodiments of this specification, and will not be described again here.

It can be seen that after the first testing task is completed, the used CPU, I/O unit 31, etc. can also be used to execute other testing tasks, effectively ensuring full and effective utilization of resources.

Wherein the cluster control module 6 may also determine the data transmission relationship between the selected CPUs in the industrial-personal-computer and I/O units corresponding to the test containers, and feed back the data transmission relationship of the test containers to the I/O control module 2.

It can be seen from the above that after each time the configuration of the test container of the current testing task is completed, the cluster control module 6 can immediately use the selected CPUs in the industrial-personal-computer 11 and I/O unit 31 corresponding to the test container to execute the current testing task to test the DUT 4. If the CPUs currently in the idle state and the I/O units 31 currently in the idle state are able to meet the testing requirements of another testing task in the task queue, repeat the above process and select the CPU and I/O unit 31 to execute the testing tasks that are met the testing requirements; if the CPUs currently in the idle state and the I/O units 31 currently in the idle state cannot meet the testing requirements of the remaining testing tasks in the task queue, after any testing task in the execution state is completed and the corresponding CPUs and I/O units 31 are released, the CPUs and I/O units 31 are selected again to execute the testing tasks that their testing requirements are met until there are no testing tasks to be executed in the task queue; that is, after being released, the CPU and I/O units 31 can be quickly used to execute another testing task, so that the CPUs and the I/O units 31 can be fully and efficiently utilized.

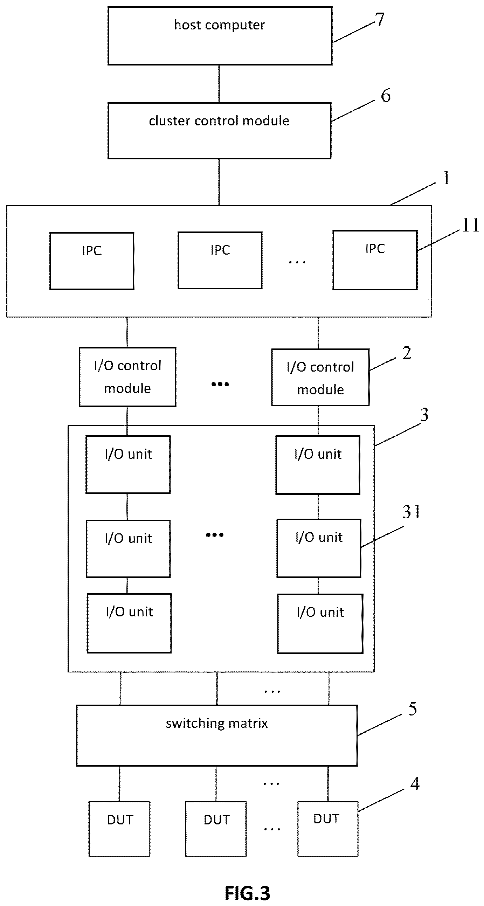

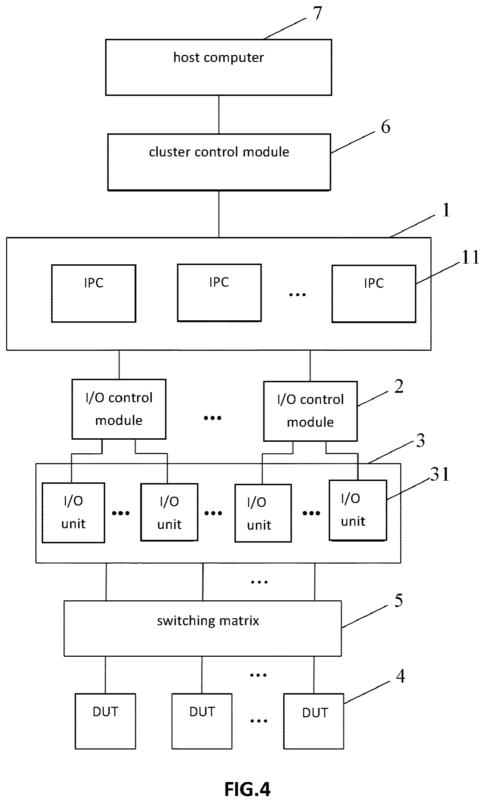

It should be noted that in the embodiments, the number of I/O control modules 2 being one is mainly took as an example, but not limited to this, the number of I/O control modules 2 may also be multiple, each I/O control module 2 corresponds to and is communicatively connected to one or more of the I/O units 31, that is, each I/O control module 2 corresponds to one or more I/O units 31, and each I/O unit 31 only corresponds to one I/O control module 2, the I/O control modules 2 are connected to the corresponding I/O units 31. Wherein, each I/O control module 2 and the corresponding I/O unit 31 can be connected in cascade, as shown in FIG.3, taking each I/O control module 2 corresponding to three I/O units 31 as an example; or each I/O control module 2 is directly connected to the corresponding I/O units 31, as shown in FIG.4, taking each I/O control module 2 corresponding to a plurality of I/O units 31 as an example.

The I/O control module 2 is used to transmit target data between the second target industrial-personal-computer and the target I/O unit based on the secondary data transmission relationship between the second target industrial-personal-computer among the K industrial-personal-computers 11 and the target I/O unit among the L I/O units 31; wherein the target I/O unit is the I/O unit corresponding to the I/O control module 2, and the second target industrial-personal-computer is the industrial-personal-computer 11 that exists data transmission with the target I/O unit.

For the current first testing task, if the L I/O units 31 selected by the cluster control module 6 correspond to a plurality of I/O control modules 2, that is, during the process of executing first testing task to test the first DUT, data interaction between N CPUs and L I/O units 31 are implemented by the plurality of I/O control modules 2, at this time, each I/O control module 2 has its own corresponding secondary data transmission relationship, the specific determination methods of the secondary data transmission relationship corresponding to each I/O control module 2 are, for example (but not limited to) the following two:
First, in the cluster control module 6, the corresponding relationship between the I/O control module 2 and the I/O unit 31 is preset, after selecting N CPUs and L I/O units 31, and determining the data transmission relationship between the K first target industrial-personal-computers including the selected N CPUs and L I/O units, that is, after determining the data transmission relationship between the K first target industrial-personal-computers and L I/O units 31 corresponding to the test container, based on the corresponding relationship between the I/O control module 2 and the I/O unit 31, the cluster control module 6 determines that the selected L I/O units 31 correspond to the plurality of I/O control modules 2. Taking any I/O control module 2 among the plurality of I/O control modules 2 as an example, for all target I/O units( may be one or more) corresponding to the I/O control module 2 among the L I/O units 31, based on the data transmission relationship between the target industrial-personal-computer to which the N CPUs belong and the L I/O units 31, at least one target CPU of the N CPUs that has data transmission with the target I/O unit is selected, each second target industrial-personal-computer includes at least one target CPU, and then a secondary data transmission relationship is established between the target industrial-personal-computer to which the target CPU belongs and the target I/O unit, the secondary data transmission relationship is the data transmission relationship corresponding to the I/O control module 2. Based on the above process, the cluster control module 6 can determine the secondary data transmission relationship corresponding to each I/O control module 2 in the above-mentioned plurality of I/O control modules 2, and send the respective secondary data transmission relationship to the corresponding I/O control modules 2, thus during testing, the I/O control modules 2 are able to transmit data between the target CPU included in the second target industrial-personal-computer and the corresponding target I/O unit based on the corresponding secondary data transmission relationship.

Second, after selecting K first target industrial-personal-computers including N CPUs and L I/O units 31 and determining the data transmission relationship of the K first target industrial-personal-computers and L I/O units 31, that is, after determining the data transmission relationship between the K first target industrial-personal-computers corresponding to the test container and the L I/O units 31, based on the correspondence relationship between the I/O control module 2 and the I/O unit 31, the cluster control module 6 determines that the selected L I/O units 31 correspond to a plurality of I/O control modules 2; and then sends the determined data transmission relationship to the plurality of I/O control modules 2 respectively. Each I/O control module 2 is preset with the identification information of its own corresponding I/O unit 31, that is, each I/O control module 2 is preset with the concerned target I/O units; taking any I/O control module 2 as an example, after receiving the data transmission relationship sent by the cluster control module 6, the I/O control module 2 determines the target I/O unit that is concerned itself from the L I/O units 31, and based on the data transmission relationship between the K first target industrial-personal-computers and the L I/O units 31, selects at least one target CPU from the N CPUs that has data transmission with the target I/O unit; and then establishes a secondary data transmission relationship between the second target industrial-personal-computer including at least one target CPU and the target I/O unit, the secondary data transmission relationship is the data transmission relationship corresponding to the I/O control module 2. Based on the above process, each I/O control module 2 is able to determine its corresponding secondary data transmission relationship based on the data transmission relationship sent by the cluster control module 6, thus during testing, the I/O control modules 2 are able to transmit data between the target CPU included in the second target industrial-personal-computer and the corresponding target I/O unit based on the corresponding secondary data transmission relationship.

In this embodiment, based on the testing requirement information of the testing task, the CPUs of the industrial-personal-computer and the I/O units that execute the testing task are configured, and the corresponding CPU and I/O unit are determined to be idle after testing to avoid occupation of them affecting the development of other testing tasks, so that on the basis of completing the testing tasks, it is possible to fully utilize the resources of the industrial-personal-computer and I/O unit in the testing system, achieving flexible configuration and improving test efficiency.

In addition, at the same time, before or after the testing requirement information is determined, the host computer can also be used to configure at least one of the following as reference information: how many input/output ports will be generated by the simulation model running on the industrial-personal-computer11 in the first testing task, which ports of which types of I/O units 31 are required to use, and the connection relationship between the I/O unit 31 and the object under test 4. Therefore, the data transmission relationship can be determined based on the reference information and the quantity characterized by the testing requirement information.

The third embodiment of the present application relates to a testing system, compared with the first embodiment, the main improvement of this embodiment is that this embodiment provides a star-shaped connection between the industrial-personal-computer 11 and the I/O control module 2, which is used to synchronize the target data of the industrial-personal-computers 11 to the I/O control module 2, and to synchronize the target data derived from the DUT 4 received by the I/O control module 2 to the industrial-personal-computers 11, where the industrial-personal-computers 11 referred to are K industrial-personal-computers 11 that execute testing tasks, and the target data are target data generated by the K industrial-personal-computers 11 or the DUT 4 during the testing process of executing the testing task.

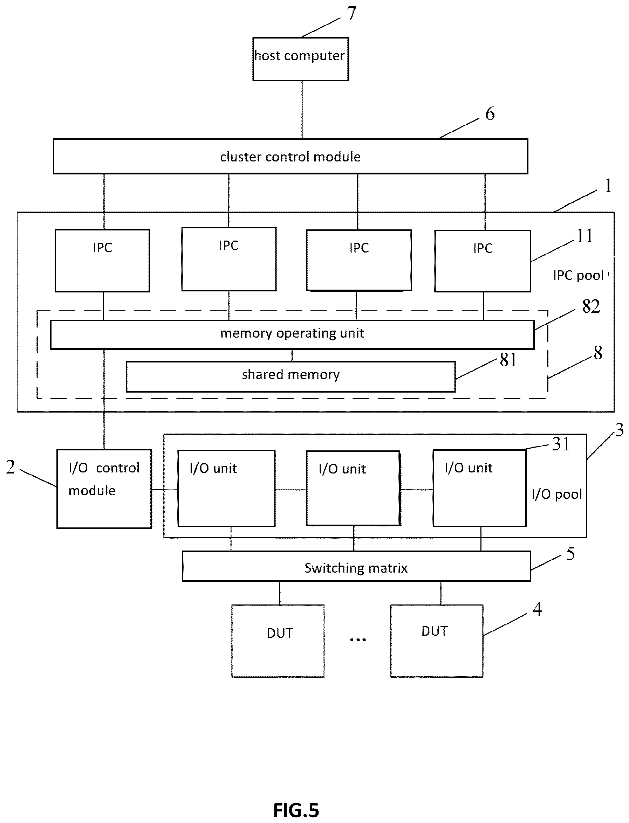

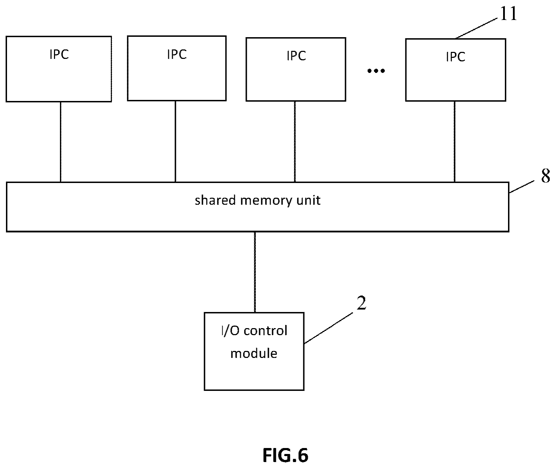

Referring to FIG.5 and FIG.6, the testing system further includes: a shared memory unit 8, the industrial-personal-computers 11 are connected to the shared memory unit 8 through the PCIe bus, the shared memory unit 8 includes: a shared memory 81 and a memory operating unit 82, where the shared memory 81 may be a single DDR memory or a memory pool including a plurality of DDR memories. Some or all of the DDR memories may be located in one cabinet. The DDR memories may also be across cabinets, for example, distributed in different cabinets.

The industrial-personal-computers 11 are directly or indirectly connected to the memory operating unit 82. The memory operating unit 82 is communicatively connected to the I/O control module 2. The memory operating unit 82 is also connected to the shared memory 81.

The memory operating unit 82 is configured to, when receiving an operation instruction for operating the shared memory 81 from any designated device in the industrial-personal-computer 11 and the I/O control module 2, execute the received operation instruction to write at least part of the target data into the shared memory 81; or, read at least part of the target data from the shared memory 81 and feed the read target data back to the designated device. That is, the memory operating unit 82 is able to interact the target data corresponding to the operation instruction with the shared memory 81, the target data corresponds to the operation instruction, specifically the data to be written or read by the operation instruction.

In this embodiment, the industrial-personal-computers 11 and the I/O control module 2 are all connected to the shared memory unit 8, thereby making a star connection between the industrial-personal-computers 11 and the I/O control module 2 through the shared memory unit 8.

During testing, the memory operating unit 82 receives operation instructions from any designated device in the industrial-personal-computers 11 and the I/O control module 2, the operation instructions are used to write target data to the shared memory 81 or read at least part of the target data in the shared memory 81, the memory operating unit 82 executes the operation instruction sent by the designated device, if the operation instruction is used to write at least part of the target data to the shared memory 81, the operation instruction contains the target data that needs to be written, and the memory operating unit 82 executes the operation instruction and writes the target data contained in the operation instruction to the shared memory 81; if the operation instruction is used to read at least part of the target data in the shared memory 81, the operation instruction includes an identification information of the target data to be read, which characterizes the industrial-personal-computer 11 or I/O unit 31 from which the target data is derived, the memory operating unit 82 executes the operation instruction, reads the target data corresponding to the identification information in the operation instruction, and feeds the target data back to the designated device that sends the operation instruction.

Wherein, the memory operating unit 82 may receive a plurality of operation instructions, determine the execution sequence of the plurality of operation instructions received, and execute the operation instructions one by one based on the execution sequence; wherein the execution sequence can be the time sequence in which the memory operating unit 82 receives the operation instructions, the execution sequence of operation instructions can also be set according to set rules (such as reading first and then writing, or writing and then reading, etc.).

In one embodiment, the memory operating unit 82 can be implemented using FPGA.

In another embodiment, the memory operating unit 82 can also be implemented using a memory expansion controller MXC, which is a memory controller that supports the Compute Express Link (CXL) protocol. The memory expansion controller MXC supports and complies with the JEDEC standards of DDR4 and DDR5, it complies with the specifications of CXL2.0 and CXL3.0, and supports the transmission speed of PCIE5.0. The memory expansion controller MXC is capable of realizing high-bandwidth and low-latency communication interconnection among the industrial-personal-computer 11, the I/O control module 2 and the CXL device, allowing the industrial-personal-computer 11 and the I/O control module 2 to achieve higher data shared performance through shared memory. Wherein, when using the memory expansion controller MXC to implement the memory operating unit 82, the customized functions and parameters of the memory expansion controller MXC can be adjusted based on the star connection data sharing mode between the industrial-personal-computers 11 and the I/O control module 2 in this embodiment to share data better.

Specifically, the memory operating unit 82 includes a CXL sub-module and a memory connection sub-module, the CXL sub-module is provided with a MXC controller and a CXL controller that are connected to each other; the memory connection sub-module is provided with a memory DDR4/5 memory controller, DDR4 /5 slot; the CXL controller is connected to the industrial-personal-computer 11 and the I/O control module 2 through the PCIE interface; the CXL controller is further connected to the shared memory 81 through the memory connection sub-module; it should be noted that the memory operating unit 82 further includes: GPIO interface, JTAG interface, clock/reset interface, SPI interface and other peripheral circuits, which will not be described one by one here.

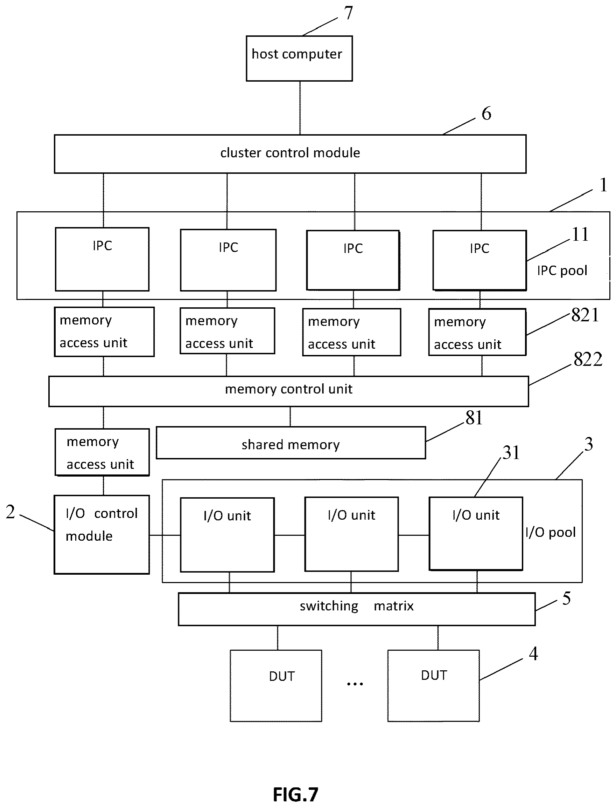

In another example, referring to FIG.7, the memory operating unit 82 includes: at least one memory access unit 821 and a memory control unit 822; the industrial-personal-computer 11 and the memory access unit 821 are in one-to-one correspondence and are communicatively connected, and each memory access unit 821 is connected to the memory control unit 822, that is, each industrial-personal-computer 11 is connected to the memory control unit 822 through the corresponding memory access unit 821, the memory control unit 822 is also communicatively connected with the I/O control module 2, and the memory control unit 822 is also connected to the shared memory 81. In one example, the I/O control module 2 corresponds to and is communicatively connected to one memory access unit 821, and this memory access unit 821 is also connected to the memory control unit 822.

Wherein, the industrial-personal-computers 11 are connected to the corresponding memory access unit 821 through the PCIe bus, that is, one terminal of the memory access unit 821 is plugged into the corresponding industrial-personal-computer 11 through PCIe, and the other terminal of the memory access unit 821 is connected to the memory control unit 822 through a high-speed serial bus. The memory access unit 821 are connected to the industrial-personal-computers 11 in the industrial-personal-computer pool 1, and the memory access unit 821 and the memory control unit 822 are arranged in the industrial control cabinet where the industrial-personal-computer pool 1 is located. The I/O control module 2 can be connected to the corresponding memory access unit 821 through the PCIe bus.

In this embodiment, taking the testing system including four industrial-personal-computers 11 and three I/O units 31 as an example, the three I/O units 31 are cascaded in sequence, and the I/O control module 2 is connected to one of the I/O units 31.

The memory control unit 822 is used to receive the operation instructions sent by the designated device through the memory access unit 821, and execute the received operation instructions, that is, the designated device can send the operation instructions to the memory control unit 822 through the corresponding connected memory access unit 821, and the memory control unit 822 executes the received operation instruction to write at least part of the target data into the shared memory 81; or, read at least part of the target data from the shared memory 81 and feed the read target data back to the designated device. Wherein, the memory control unit 822 can receive a plurality of operation instructions, determine the execution sequence of the plurality of operation instructions received, and execute the operation instructions one by one based on the execution sequence; wherein the execution sequence can be the time sequence in which the memory control unit 822 receives the operation instructions, or the execution sequence of operation instructions can also be set according to set rules (such as read first and writing later, or write first and read later, etc.).

In this embodiment, the respective industrial-personal-computers 11 or the I/O control module 2 map the target data that needs to be shared to a segment of address space in the shared memory 81 through the PCIe memory mapping technology, the software on the respective industrial-personal-computers 11 and the I/O control module 2 can read data and instructions from the shared memory 81 by accessing local memory data, thereby realizing read and write access to the same memory data by the respective industrial-personal-computers 11 and the I/O control module 2, and enabling the sharing of target data between the industrial-personal-computers 11 and the I/O control module 2.

In this embodiment, the memory access unit 821 is used as a standard PCIe device, which can convert the operation instructions from any designated device in the industrial-personal-computer 11 and the I/O control module 2 into high-speed serial signals, and transmit the high-speed serial signal representing the operation instruction to the memory control unit 822 through the high-speed serial bus, and the memory control unit 822 executes the operation instruction to read the target data from and write the target data to the shared memory 81.

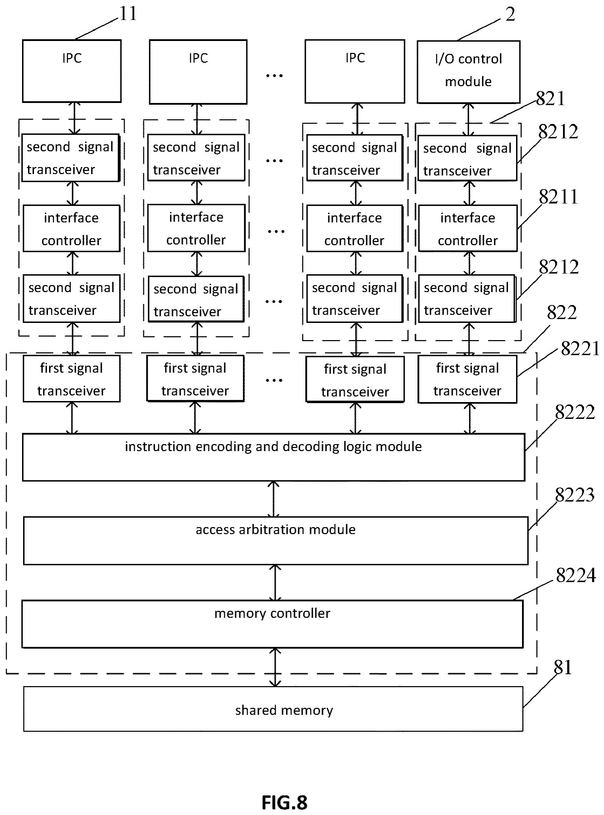

In one example, referring to FIG.8, the memory control unit 822 includes: at least one first signal transceiver 8221, and an instruction encoding and decoding logic module 8222, an access arbitration module 8223 and a memory controller 8224 that are communicatively connected in sequence. Wherein, at least one first signal transceiver 8221, the instruction encoding and decoding logic module 8222, the access arbitration module 8223 and the memory controller 8224 can be implemented based on FPGA.

The first signal transceiver 8221 corresponds one-to-one and is communicatively connected with the memory access unit 821, the first signal transceivers 8221 are also connected to the instruction encoding and decoding logic module 8222 respectively, and the memory controller 8224 is also connected to the shared memory 81.

Each memory access unit 821 includes: an interface controller 8211 and two second signal transceivers 8212, one of the second signal transceivers 8212 is connected between the interface controller 8211 and the industrial-personal-computer 11 or I/O control module 2 corresponding to the memory access unit 821, the other is connected between the interface controller 8211 and the memory control unit 822.

The respective devices in the industrial-personal-computer 11 and the I/O control module 2 are connected to one second signal transceiver 8212 of the corresponding memory access unit 821, and another second signal transceiver 8212 of the memory access unit 821 is connected to the corresponding first signal transceiver 8221.

In this embodiment, the second signal transceiver 8212 in the memory access unit 821 and/or the first signal transceiver 8221 in the memory control unit 822 may be a serial deserializer (SERDES).

The interface controller 8211 in each memory access unit 821 is connected to the corresponding device. The interface controller 8211 is used to receive operation instructions from the corresponding device through the second signal transceiver 8212, and send the high-speed serial signal representing the operation instructions to the memory control unit 822. Specifically, for each memory access unit 821, it receives the operation instruction sent by the connected device, converts the operation instruction into the high-speed serial signal, and then sends the high-speed serial signal representing the operation instruction to the instruction encoding and decoding logic module 8222 of the memory control unit 822 through the first signal transceiver 8221 connected to the second signal transceiver 8212 of the memory access unit 821.

The instruction encoding and decoding logic module 8222 is used to decode the signal sent by the designated device received from the respective first signal transceivers 8221 to obtain the operation instruction, and send the operation instruction to the access arbitration module 8223. Specifically, when receiving the high-speed serial signals transmitted from the respective first signal transceivers 8221, the instruction encoding and decoding logic module 8222 decodes the high-speed serial signal to obtain the operation instruction derived from the designated device, and sends the operation instruction obtained by decoding to the access arbitration module 8223.

In one example, the instruction encoding and decoding logic module 8222 is provided with at least one decoding channel, and the first signal transceiver 8221 corresponds one-to-one and is connected with the decoding channel; the instruction encoding and decoding logic module 8222 is used to decode the signals received by at least one first signal transceiver 8221 in parallel through the at least one decoding channel. That is, the corresponding decoding channels are provided in the instruction encoding and decoding logic module 8222 for the respective first signal transceivers 8221, and all signals received from the first signal transceivers 8221 are decoded through the corresponding decoding channel, thereby enabling decoding the signals transmitted by at least one first signal transceiver 8221 to the instruction encoding and decoding logic module 8222 in parallel, and sending the obtained operation instructions to the access arbitration module 8223.

In another example, the instruction encoding and decoding logic module 8222 is provided with one decoding channel, and the first signal transceivers 8221 are connected to the decoding channel respectively, the decoding channel is also connected to the access arbitration module 8223; the instruction encoding and decoding logic module 8222 is used to decode the signals received from the respective first signal transceivers 8221 through the decoding channel. That is, the instruction encoding and decoding logic module 8222 is provided with only one decoding channel, all signals received by the first signal transceiver 8221 are decoded through this decoding channel, and the obtained operation instructions are sent to the access arbitration module 8223; for example, the decoding channel decodes in sequence according to the time sequence in which the signals are sent to the instruction encoding and decoding logic module 8222.

The access arbitration module 8223 is used to send the received operation instructions to the memory controller 8224. Specifically, when receiving the operation instructions sent by the instruction encoding and decoding logic module 8222, the access arbitration module 8223 sends the operation instructions to the memory controller 8224, for example, the access arbitration module 8223 arranges the received operation instructions in reception time sequence or in any sequence into queue, and send the operation instructions in the queue to the memory controller 8224 in sequence. For another example, the access arbitration module 8223 can also execute some or all of the operation instructions at the same time, for further example, the access arbitration module 8223 can also judge the priorities of the operation instructions based on other preset logic, and then execute the operation instructions based on the priorities to operate the shared memory 81. The access arbitration module 8223 can also adjust the execution sequence of the operation instructions and the number of operation instructions executed simultaneously, etc. according to the execution efficiency of the operation instructions and its own load.

The memory controller 8224 is used to execute the received operation instruction to write at least part of the target data into the shared memory 81; or to read at least part of the target data from the shared memory 81 and feed the read target data back to the designated device.

In this embodiment, a star-shaped connection is used between the industrial-personal-computers and the I/O control module, the industrial-personal-computers and the I/O control module can synchronize the target data that needs to be shared to the shared memory 81 of the shared memory unit 8, thus enabling a plurality of devices (including industrial-personal-computers and I/O control modules) to read data from and write data to the same physical memory, which can ensure data consistency among the multiple devices, and has the advantages of high sharing efficiency, good accuracy and low latency.

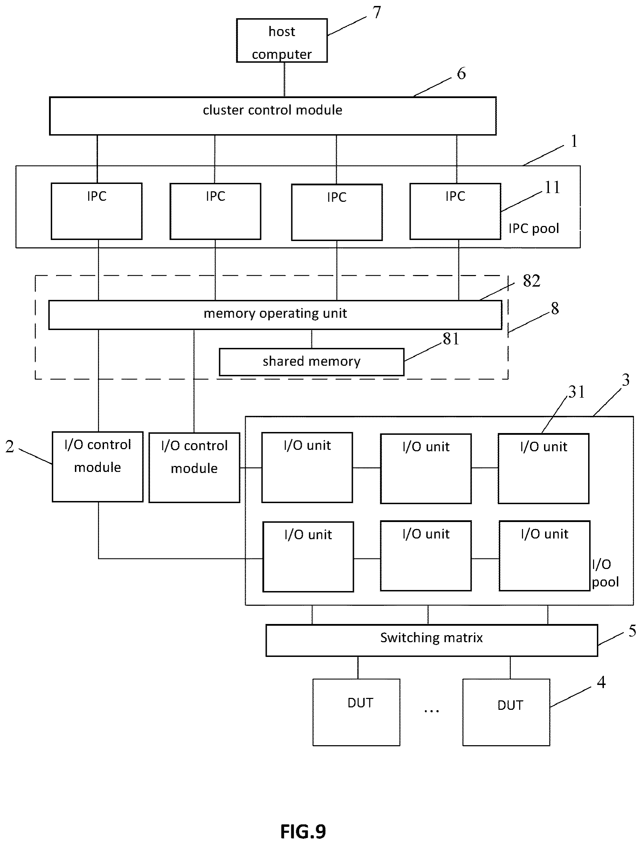

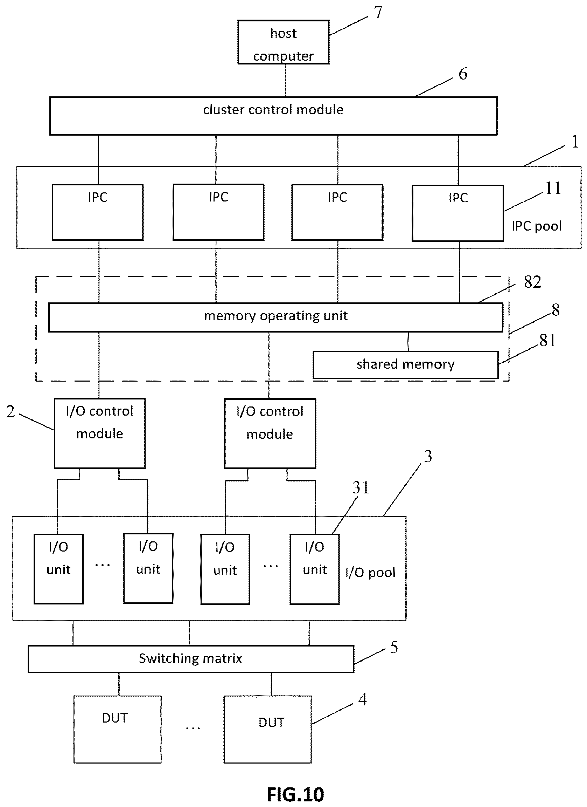

It should be noted that this embodiment can also be applied to a scenario where the number of I/O control modules 2 is multiple, wherein each I/O control module 2 and the corresponding I/O units 31 may be connected in cascade, as shown in FIG.9, taking the number of I/O control modules 2 being two and each I/O control module 2 corresponding to three I/O units 31 as an example; or each I/O control module 2 is directly connected to the corresponding I/O units 31 respectively, as shown in FIG.10, taking the number of I/O control modules 2 being two and each I/O control module 2 corresponding to a plurality of I/O units 31 as an example.

The fourth embodiment of the present application relates to a testing system, compared with the first embodiment, the main improvement of this embodiment is that this embodiment provides a cascade connection mode between the industrial-personal-computer 11 and the I/O control module 2, which is used to synchronize the target data of the industrial-personal-computers 11 to the I/O control module 2, and to synchronize the target data from the DUT 4 received by the I/O control module 2 to the respective industrial-personal-computers 11, wherein the industrial-personal-computers 11 referred to here are the K industrial-personal-computers 11 that execute the testing task, and the target data may be the target data generated by the K industrial-personal-computers 11 or the DUTs 4 during testing of executing the testing task, but it is not limited to this.

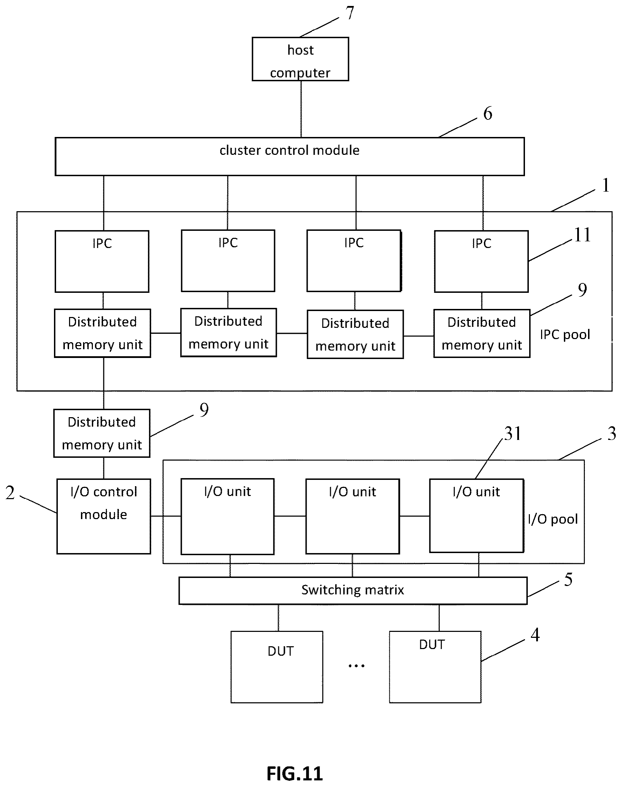

Referring to FIG.11, the testing system further comprises: a plurality of distributed memory units 9. The industrial-personal-computers 11 correspond one-to-one and are connected with the distributed memory unit 9, the I/O control module 2 corresponds to and is connected to one distributed memory unit 9, and the plurality of distributed memory units 9 are cascaded in sequence.

Thus, the cascade connection between the industrial-personal-computer 11 and the I/O control module 2 is realized through the plurality of distributed memory units 9 cascaded. Wherein, the distributed memory unit 9 may be plugged into the corresponding industrial-personal-computer 11 or I/O control module 2 through the PCIe bus, and the distributed memory units 9 are communicatively connected through high-speed serial bus, and the distributed memory units 9 connected to the industrial-personal-computers 11 can be directly plugged into the corresponding industrial-personal-computer 11 in the industrial-personal-computer pool 1.

It should be noted that in this embodiment, the I/O control module 2 being the last level of the cascade connection, that is, the I/O control module 2 being connected to the last-level distributed memory unit 9 in the plurality of distributed memory units 9 cascaded, is taken as an example for description, but not limited to this, and the I/O control module 2 may also be any level of the cascade connection, and this embodiment does not limit to this.

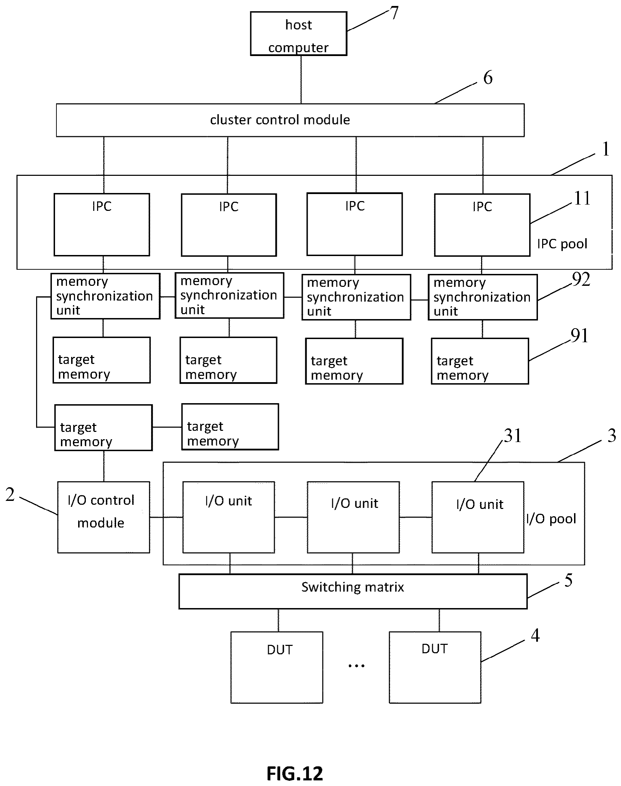

Referring to FIG.12, each distributed memory unit 9 includes a target memory 91 and a memory synchronization unit 92; the industrial-personal-computer 11 is connected to the memory synchronization unit 92 in the corresponding distributed memory unit 9, and the I/O control module 2 is connected to the corresponding memory synchronization unit 92 in the distributed memory unit 9.

For the target memory 91, built-in or external components, chips, circuits or means containing components, chips or circuits, etc. may be used as an example of the target memory 91.

In addition, the devices (the industrial-personal-computer 11 or the I/O control module 2) may have only one external or built-in memory, namely the target memory 91; or the device may be provided with a plurality type of memories, and the target memory 91 may be one type of them. At the same time, the target memory 91 can also be understood as a memory used for sharing data among devices (especially between the industrial-personal-computer 11 and the I/O control module 2).

The interaction speed between the target memory 91 and the CPU in the device (such as the speed of writing and reading data) is higher than traditional communication networks such as Ethernet. For example, it can be achieved by using at least one of high-speed serial buses, optical fibers, etc. Furthermore, unlike traditional communication networks such as Ethernet, it provides a concept for high-speed data sharing. The CPU in the device can directly access the target memory 91 in the same way as local memory, effectively improving synchronization efficiency, through detecting, in specific embodiments, the data synchronization bandwidth can reach 10Gbps.

The target memory 91 may be one memory (for example, DDR) or a cluster of multiple memories.

The target data transmitted between the I/O unit 31 and the industrial-personal-computer 11 is transmitted based on the operation result of the memory synchronization unit 92 on the target memory 91, and all data in the target memory 91 remain synchronized.

In this embodiment, the data synchronization methods between at least one industrial-personal-computer 11 and the I/O control module 2 that are cascaded can be, for example (but not limited to) the following two, specifically as follows:
Method 1: When the plurality of distributed memory units 9 cascaded are connected in a closed loop, the distributed memory unit 9 that can generate and send operation requests may be understood as the first distributed memory unit 9, which is directly connected to the last distributed memory unit 9, the operation request transmitted by the first distributed memory unit 9 is directly transmitted to the first distributed memory unit 9 by the last distributed memory unit 9 after the last distributed memory unit 9 completing the first transmission process; the second transmission process is the process in which the operation request is returned to the first distributed memory unit 9 and then transmitted again from the first distributed memory unit 9 to the last distributed memory unit 9, the operation request in the second transmission process is transmitted from the first distributed memory unit 9 to the last distributed memory unit 9 in sequence, for each distributed memory unit 9, when receiving the operation request, this distributed memory unit 9 obtains the information contained in the operation request, and execute all the obtained operation instructions to operate the target memory 91, at the same time, transmits the operation request to the next-level distributed memory unit 9 until transmitting to the last distributed memory unit 9, when the last distributed memory unit 9 receives the operation request, it also executes all the operation instructions contained in the operation request and operates the target memory 91, at this time, the second transmission process ends, and all distributed memory units 9 have executed all operation instructions contained in the operation request, and perform the same operation on their own target memories 91. It should be noted that during the second transmission process of the operation request, all distributed memory units 9 need to execute all operation instructions contained in the operation request in the same sequence to ensure that the data among the target memories 91 in the plurality of distributed memory units 9 is kept synchronized. This data synchronization method is simple and can also ensure the reliability of data synchronization.

Method 2: Data synchronization is achieved through one round-trip transmission of operation requests in the plurality of distributed memory units 9 cascaded, specifically as follows:
The memory synchronization unit 92 is use to, when receiving an operation request in the first transmission process, if the distributed memory unit 9 to which it belongs needs to perform a target operation on the target memory 91, write the operation instruction of the target operation into the operation request, and transmit the operation request to the next-level distributed memory unit 9; the first transmission process is the process in which the operation request is sequentially transmitted from the first distributed memory unit 9 to the last distributed memory unit 9 in the plurality of distributed memory units 9 cascaded.

In some embodiments, for each distributed memory unit 9 , when the memory synchronization unit 92 of the distributed memory unit 9 receives an operation request in the first transmission process, and the distributed memory unit 9 needs to perform a target operation on its own target memory 91, it also needs to determine whether the preset conditions of the target operation are met, if the preset conditions of the target operation are met, the memory synchronization unit 92 writes the operation instructions of the target operation into the operation request, and transmits the operation request to the next-level distributed memory unit 9; if the preset conditions of the target operation are not met, the memory synchronization unit 92 prohibits writing the operation instructions of the target operation into the operation request, and directly transmits the operation request to the next-level distributed memory unit 9, until the operation request is transmitted to the last distributed memory unit 9, and the last distributed memory unit 9 also performs the above-mentioned judgment processing process.

Wherein, for each distributed memory unit 9, the preset conditions may be whether the distributed memory unit 9 has the authority to operate the first target memory area in the target memory 91, and the first target memory area is a memory area in the target memory 91 that is required to be operated when the distributed memory unit 9 executes the target operation, whereby the distributed memory unit 9 writes the operation instruction of the target operation into the operation request only when it has the authority to operate on the first target memory area in the target memory 91, and it is able to configure the authorities of different distributed memory units 9 to modify the data in the target memory 91 respectively, thereby preventing data errors and other problems caused by the unauthorized distributed memory unit 9 operating on the first target memory area in the target memory 91.

Alternatively, the memory synchronization unit 92 is used to determine whether the target operation is used to operate on the second target memory area in the target memory 91 of the target distributed memory unit; when the target operation is used to operate on the second target memory area in the target memory 91 of the target distributed memory unit; it is determined that the preset conditions of the target operation are met; when the target operation is not used to operate on the second target memory area in the target memory 91 of the target distributed memory unit, it is determined that the target distributed memory unit does not meet the preset conditions for the target operation.

That is, the preset condition is that the target operation is used to operate on the second target memory area in the target memory 91, that is, the memory synchronization unit 92 of each distributed memory unit 9 only executes the operation instruction for operating on second target memory area in the target memory 91, and then is able to configure the distributed memory units 9 to perform writing operation in the second target memory area in the target memory 91 to facilitate subsequent reading operations of target data.

The memory synchronization unit 92 is used to, when receiving an operation request in the second transmission process, operate on the target memory 91 of the corresponding distributed memory unit 9 based on all the operation instructions contained in the operation request, and transmit the operation request to the previous level distributed memory unit 9; the second transmission process is the process in which the operation request is sequentially transmitted from the last distributed memory unit 9 to the first distributed memory unit 9 after the first transmission process. In one example, the memory synchronization unit 92 sequentially operates on the target memory 91 in the sequence in which all the operation instructions in the operation request are written into the operation request, that is, at least part of the target data required for the operation instructions to be written into the target memory is written into the target memory 91 in sequence.

After the second transmission process is completed, the target memories 91 in the plurality of distributed memory units 9 remain data synchronization, so that at least part of the target data is synchronously written into the target memories 91 of the respective distributed memory units 9.

In some other embodiments, a ring-shaped reflective memory synchronization method may also be used to achieve synchronization among distributed memory units 9. However, in this method, it is necessary to wait for the data writing operation of one distributed memory unit 9 to be synchronized before synchronizing the data write operation of the next distributed memory unit 9, the synchronization of the data writing operations of a plurality of distributed memory units 9 requires repeating the above process a plurality of times, causing that the time for the completion of the synchronization of all data write operations is long, the data synchronization efficiency is low, and it is difficult to meet the HIL system with high data synchronization requirements.

During the processing of the first transmission process and the second transmission process, only two rounds of operation requests are transmitted among the plurality of distributed memory units 9 cascaded to complete data synchronization among the target memories in all distributed memory units 9, so as to ensure data consistency among the target memories 91 of the plurality of distributed memory units 9, decrease data synchronization cycles, and has the advantages of high sharing efficiency, good accuracy, and low latency. Specifically, it can prevent operation instructions generated at similar times from being executed with a large delay.

In addition, during the second transmission process of the operation request, the transmission of the operation request by the distributed memory units 9 and the execution of the operation instructions in the operation request by the distributed memory units 9 can be in parallel, that is, while executing the operation instructions, transmit the operation request to the next distributed memory unit 9 that needs to be transmitted, in some data synchronization solutions, the operation instructions need to be executed first and then transmitted, in comparison, the parallel method can improve the synchronicity of execution of operation instructions by the distributed memory units 9.

It can be seen from the above that in this embodiment, the data synchronization among the target memories 91 of a plurality of distributed memory units 9 is divided into two processes, specifically as follows:
The first is the first transmission process of the operation request, the operation request in the first transmission process is transmitted from the first distributed memory unit 9 to the last distributed memory unit 9 in sequence, for each distributed memory unit 9, if there are still unexecuted operation instructions that need to perform the target operation on the target memory 91 when the memory synchronization unit 92 of the distributed memory unit 9 receives the operation request, the memory synchronization unit 92 writes the operation instructions into the operation request, and transmits the operation request to the memory synchronization unit 92 of the next-level distributed memory unit 9; until it is transmitted to the last distributed memory unit 9, the last distributed memory unit 9 also performs the above processing when receiving the operation request, at this time, the first transmission process of the operation request ends, the operation request contains the operation instructions that the distributed memory units 9 need to perform the target operation on the target memory 91, and then the second transmission process of the operation request is started.

Wherein, the operation instructions required to perform target operations on the target memory 91 in the distributed memory unit 9 originate from the industrial-personal-computer 11 or the I/O control module 2 connected to the distributed memory unit 9.

The second is the second transmission process of the operation request, the second transmission process is the return process of the operation request, the operation request in the second transmission process is transmitted back from the last distributed memory unit 9 to the first distributed memory unit 9 in sequence, for each distributed memory unit 9, when receiving an operation request, the memory synchronization unit 92 of the distributed memory unit 9 obtains all operation instructions contained in the operation request, and executes all the obtained operation instructions, operates on the target memory 91, and at the same time transmits the operation request to the memory synchronization unit 92 of the previous level distributed memory unit 9 until it is transmitted to the first distributed memory unit 9, and when receiving the operation request, the memory synchronization unit 92 in the first distributed memory unit 9 also executes all the operation instructions contained in the operation request and operates on the target memory 91, at this time, the second transmission process ends, and all the distributed memory units 9 have executed all the operation instructions contained in the operation request, and perform the same operation on its own target memory 91. It should be noted that during the second transmission process of the operation request, all distributed memory units 9 need to execute all operation instructions contained in the operation request in the same sequence to ensure that data among the target memories 91 in the plurality of distributed memory units 9 is kept synchronized.

The first distributed memory unit 9 can be understood as the distributed memory unit of the industrial-personal-computer 11 or the I/O control module 2 that generates the operation request. It can be a distributed memory unit of a certain fixed industrial-personal-computer 11 or I/O control module 2, or it can be changed automatically or manually according to actual needs.

In one example, in each distributed memory unit 9, the memory synchronization unit 92 is used to sequentially perform operations on the target memory 91 of the distributed memory unit 9 to which it belongs in the sequence in which all the operation instructions in the operation request are written into the operation request. In another example, the target memory 91 of the current distributed memory unit 9 may also be operated sequentially in the reverse sequence of the sequence in which all the operation instructions in the operation request are written into the operation request. In yet another example, the sequence of all the operation instructions in the operation request can be reset (for example, after the first transmission process is completed, the sequence is reset by the last distributed memory unit 9), and then the respective distributed memory units 9 operate sequentially on the target memory 91 of the current distributed memory unit 9 in the same reset sequence.

In addition, if the areas and objects operated by the respective operation instructions usually do not overlap or can be confirmed not to overlap, in specific examples, some or all of the different devices may also execute the operation instructions in different sequences, which still ensures that the data among the target memories 91 in the plurality of devices is kept synchronized.

In one example, in the first distributed memory unit among the plurality of distributed memory units 9 cascaded, the memory synchronization unit 92 is used to generates a new operation request when a preset event occurs (for example, when a distributed memory unit, a corresponding device, or other means connected to the corresponding device detect that the preset event occurs), that is, the memory synchronization unit 92 generates a new operation request each time when the preset event occurs, and repeats the first transmission process and the second transmission process of the above operation request.

Wherein, the preset event is any one or any combination of the following: the first distributed memory unit 9 completes the operation of the target memory of the first distributed memory unit 9 based on all the operation instructions contained in the operation request, the first distributed memory unit 9 counts up to the set time cycle and the first distributed memory unit 9 responds to the triggered interrupt. The specific instructions are as follows:
After receiving the operation request in the second transmission process and executing all the operation instructions contained in the operation request, the first distributed memory unit 9 generates a new operation request; thus, the first distributed memory unit 9 is able to generate a new operation request cyclically, after the data synchronization among the plurality of distributed memory units 9 is completed each time, the next round of data synchronization is started, ensuring the timeliness of data synchronization among the target memories 91 of the plurality of distributed memory units 9; wherein, it is also possible to set up a certain time interval between two adjacent data synchronizations.

A timer is provided in the first distributed memory unit 9, when the timer counts up to the preset duration (i.e., the set time cycle), the first distributed memory unit 9 generates a new operation request and performs the data synchronization among the target memories 91 of the plurality of distributed memory units 9, and the timer is reset at the same time, and the timer starts counting again, the first distributed memory unit 9 will repeat the above process when the next time the timer counts up to the preset duration (i.e., the set time cycle) .

One or more interrupt flag bits are provided in the target memory 91 of the first distributed memory unit 9, when data is written in the interrupt flag bits, the first distributed memory unit 9 determines that the interrupt is triggered and generates a new operation request to perform data synchronization among the plurality of distributed memory units 9.

It should be noted that this embodiment is mainly focused on the synchronization of operation instructions that can change the data in the target memory 91 (such as writing or deleting target data), so as to ensure data synchronization among the target memories 91 in the plurality of distributed memory units 9; wherein writing includes adding new data from scratch, as well as overwriting, replacing, modifying data, etc.

For the operation instruction to read the target data, in each distributed memory unit 9, when obtaining operation instructions for reading at least part of the target data, the memory synchronization unit 92 of the distributed memory unit 9 reads corresponding at least part of the target data from the connected target memory 91. It can be seen that the target operation refers to an operation that can change the data in the target memory 91.

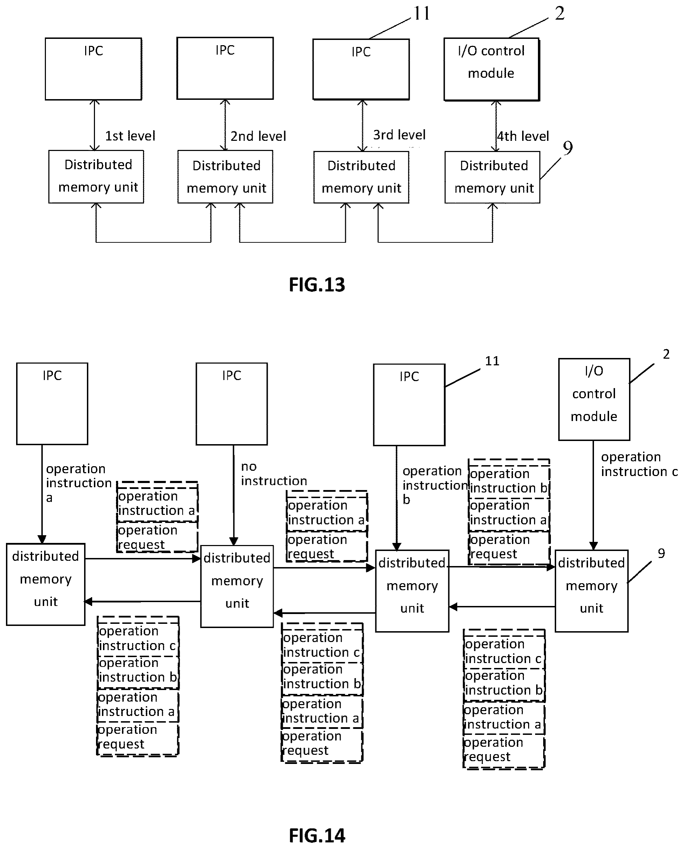

Referring to FIG.13 and FIG.14, take the testing system including three industrial-personal-computers 11, I/O control module 2 and four distributed memory units 9 as an example, the four distributed memory units 9 are cascaded in sequence, the industrial-personal-computers 11 and The I/O control module 2 are connected to the corresponding distributed memory units 9 respectively, and the I/O control module 2 is connected to the last level distributed memory unit 9.

When detecting the occurrence of a preset event, the memory synchronization unit 92 in the first distributed memory unit 9 (i.e., the first-level distributed memory unit 9) generates an operation request, and subsequently performs the first transmission process of the operation request.

The first-level distributed memory unit 9 also needs to perform a target operation on the target memory 91, the memory synchronization unit 92 appends the operation instruction a of the target operation to the operation request, and sends the operation request to the second-level distributed memory unit 9.

The memory synchronization unit 92 of the second-level distributed memory unit 9 receives the operation request containing the operation instruction a, and the second-level distributed memory unit 9 does not need to perform the target operation on the target memory 91, the memory synchronization unit 92 send the operation request containing the operation instruction a to the third-level distributed memory unit 9.

The memory synchronization unit 92 of the third-level distributed memory unit 9 receives the operation request containing the operation instruction a, the third-level distributed memory unit 9 also needs to perform the target operation on the target memory 91. The third-level distributed memory unit 9 appends the operation instruction b of the target operation to the operation request, and send the operation request containing the operation instruction a and the operation instruction b to the last distributed memory unit 9 (that is, the fourth-level distributed memory unit 9).

The memory synchronization unit 92 of the fourth-level distributed memory unit 9 receives an operation request containing the operation instruction a and the operation instruction b, the fourth-level distributed memory unit 9 also needs to perform the target operation on the target memory 91, the fourth-level distributed memory unit 9 appends the operation instruction c of the target operation to the operation request, at this time, the operation request includes: the operation instruction a, the operation instruction b, and the operation instruction c.

The first transmission process of the operation request ends, and the second transmission process of the operation request is started.

The memory synchronization unit 92 of the fourth-level distributed memory unit 9 executes all the operation instructions contained in the operation request to operate on its own target memory 91, the operation request including the operation instruction a, the operation instruction b and the operation instruction c; and returns the operation request to the third-level distributed memory unit 9.

The memory synchronization unit 92 of the third-level distributed memory unit 9 receives the returned operation request including the operation instruction a, the operation instruction b, and the operation instruction c, executes all the operation instructions contained in the operation request to operate on its own target memory 91; and returns the operation request to the second-level distributed memory unit 9.

The memory synchronization unit 92 of the second-level distributed memory unit 9 receives the returned operation request including the operation instruction a, the operation instruction b, and the operation instruction c, executes all the operation instructions contained in the operation request to operate on its own target memory 91; and returns the operation request to the first-level distributed memory unit 9.

The memory synchronization unit 92 of the first-level distributed memory unit 9 receives the returned operation request including the operation instruction a, the operation instruction b and the operation instruction c, executes all the operation instructions contained in the operation request to operate the operation request on its own target memory 91.

After the second transmission process is completed, the target memories 91 in the four distributed memory units 9 remain data synchronization, so that at least part of the target data is synchronously written into the target memories 91 of the respective distributed memory unit 9.

It should be noted that when the distributed memory units 9 at all levels execute the operation instructions contained in the operation request, it is necessary to ensure that the sequence in which the distributed memory units 9 at all levels execute the operation instructions is the same, for example, execute in the sequence in which the operation instructions are appended to the operation instructions, that is, the execution sequence is the operation instruction a, the operation instruction b, the operation instruction c; or the last-level distributed memory unit 9 sets the execution sequence of the operation instructions, for example, the execution sequence is the operation instruction c, the operation instruction a, the operation instruction b, all the distributed memory units 9 execute the operate instructions in this sequence.

Based on the above process, through the distributed memory data synchronization among the plurality of distributed memory units 9 cascaded, data synchronization between the industrial-personal-computer 11 and the I/O control module 2 is achieved, which can ensure efficiency of data sharing between the industrial-personal-computer 11 and I/O control modules 2, and meets the requirements of the hardware-in-the-loop testing process.

It should be noted that when the number of industrial-personal-computers 11 is multiple, a plurality of industrial-personal-computers 11 usually need to cooperate with each other to complete processing of the hardware-in-the-loop test, and this cooperation requires high synchronization among different industrial-personal-computers 11 and I/O control modules, at this time, the synchronization of data transmission among different industrial-personal-computers 11 and the DUTs 4 will significantly affect the test result and/or test efficiency.

For example, different industrial-personal-computers 11 often need to use different models to run tests, and different models often need to cooperate, certain information calculated by one industrial-personal-computer 11 and certain information calculated by another industrial-personal-computer 11 need to be given to the DUT (i.e. controller) at the same time, for another example, two industrial-personal-computers 11 need to obtain the information they need from the DUT 4 at the same time, for yet another example, after one industrial-personal-computer 11 sends information to the DUT 4, the other industrial-personal-computer 11 needs to take the corresponding processing results of the DUT 4 as input immediately and combine them with the processing results of its own model to perform subsequent processing.

At this time, if data sharing is achieved by using reflective memory in the existing technology, it will be difficult for different industrial-personal-computers 11 to provide the required information to the DUT 4 at the same time (or with a less delay), and it will be difficult for the DUT 4 to provide the required information to different industrial-personal-computers 11 at the same time (or with a less delay), and the information cannot be given to the DUT 4 (or industrial-personal-computer 11) in time, etc., thus affecting the test result and test efficiency. However, after using the technical solution of the embodiment of the present application, it can help to improve the synchronization of information sharing among different industrial-personal-computers 11 and the I/O control module 2.

Furthermore, in response to the above requirements in HIL scenarios, the data synchronization technical solution in this specification can effectively meet the higher synchronization requirements among devices.

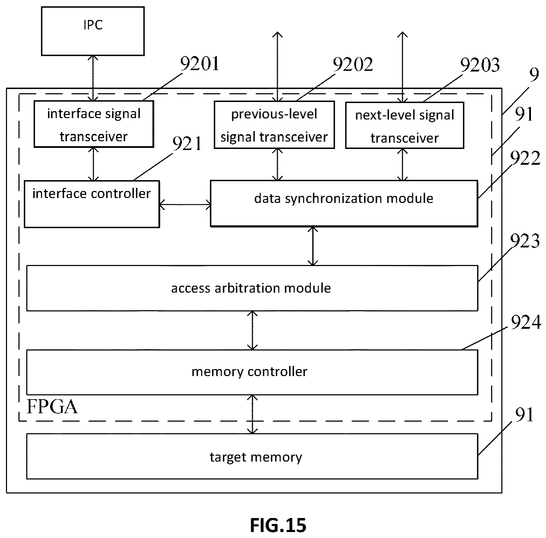

In one example, referring to FIG.15, in each distributed memory unit 9, the memory synchronization unit 92 comprises: three third signal transceivers, as well as an interface controller 921, a data synchronization module 922, an access arbitration module 923 and an memory controller 924 communicatively connected in sequence, the three third signal transceivers include: an interface signal transceiver 9201, an previous-level signal transceiver 9202, and a next-level signal transceiver 9203. Wherein, three high-speed signal transceivers, interface controller 921, the data synchronization module 922, the access arbitration module 923 and the memory controller 924 may be implemented based on FPGA.

It should be noted that in this embodiment, the access arbitration module 923 being connected between the data synchronization module 922 and the memory controller 924 is taken as an example, but is not limited to this. The access arbitration module 923 may also be connected between the interface controller 921 and the data synchronization module 922.

In addition, the interface controller 921 (for example, PCIE controller) and the target memory 91 (for example, DDR) may also be directly connected, for example, data can also be read or even written based on this connection.

In the memory synchronization unit 92 of each distributed memory unit, the interface signal transceiver 9201 is connected to the device corresponding to the distributed memory unit (which may be the industrial-personal-computer 11 or the I/O control module 2), and the previous-level signal transceiver 9202 is connected to the next-level signal transceiver 9203 of the previous-level distributed memory unit 9, and the next-level signal transceiver 9203 is connected to the previous-level signal transceiver 9202 of the next-level distributed memory unit.

In the memory synchronization unit 92 of each distributed memory unit 9:
The interface controller 921 is used to send the operation instruction to the data synchronization module 922 when receiving an operation instruction to perform a target operation on the target memory 91.

The data synchronization module 922 is used to, when receiving an operation request in the first transmission process, if an operation instruction for performing a target operation on the target memory 91 is received, write the operation instruction into the operation request, and transmit the operation request to the next-level distributed memory unit 9.

The data synchronization module 922 is used to send all operation instructions in the operation request to the access arbitration module 923 when receiving the operation request in the second transmission process.

The access arbitration module 923 is used to send all operation instructions in the operation request to the memory controller 924 in sequence.

The memory controller 924 is used to execute the received operation instructions in sequence and perform operations on the target memory 91.

In one example, the interface controller 921 is further connected to the access arbitration module 923 or the memory controller 924 in the same distributed memory unit 9 to directly or indirectly feed the operation instructions for reading the target data from the target memory 91 back to the memory controller 924. For example, the read operation instruction can be sent by the interface controller 921 to the access arbitration module 923, and then sent to the memory controller 924 via the access arbitration module 923; for another example, the read operation instruction can be sent directly by the interface controller 921 to the memory controller 924.

In another example, the operation instruction for reading target data from the target memory 91 may also be transmitted to the access arbitration module 923 via the data synchronization module 922, and then finally to the memory controller 924.

In addition, when the memory controller 924 is also connected to the interface controller 921 in the same distributed memory unit 9, it can also be used to receive the target data corresponding to the read operation instruction and send the target data corresponding to the read operation instruction to the corresponding device. In other examples, the target data corresponding to the read operation instruction can also be fed back from the memory controller 924 to the interface controller 921 via the access arbitration module 923 and/or the data synchronization module 922, and then the target data is sent to the corresponding devices by the interface controller 921.

The data synchronization among the target memories in the plurality of distributed memory units 9 in this embodiment will be described below with reference to FIGS. 13 to 15.

In the memory synchronization unit 92 of the first-level distributed memory unit 9, the interface signal transceiver 9201 is connected to the industrial-personal-computer 11, the previous-level signal transceiver 9202 is not connected, and the next-level signal transceiver 9203 is connected to the previous-level signal transceiver 9202 of the second-level distributed memory unit 9.

When the interface controller 921 detects that the preset event occurs, it generates an operation request, sends the operation request to the data synchronization module 922, and then performs the first transmission process of the operation request.

The interface controller 921 receives the operation instruction a sent by the industrial-personal-computer 11, and sends the operation instruction a to the data synchronization module 922.

When receiving the operation request, the data synchronization module 922 writes the operation instruction a into the operation request, and then sends the operation request to the second-level distributed memory unit 9.

In the memory synchronization unit 92 of the second-level distributed memory unit 9, the interface signal transceiver 9201 is connected to the industrial-personal-computer 11, the previous-level signal transceiver 9202 is connected to the first-level distributed memory unit 9, and the next-level signal transceiver 9203 is connected to the previous-level signal transceiver 9202 of the third-level distributed memory unit 9.

The data synchronization module 922 receives the operation request sent by the data synchronization module 922 in the first-level distributed memory unit 9, at this time, there is no operation instruction in the data synchronization module 922, and the data synchronization module 922 directly sends the operation request to the third-level distributed memory unit 9.

In the third-level distributed memory unit 9, the interface signal transceiver 9201 is connected to the industrial-personal-computer 11, the previous-level signal transceiver 9202 is connected to the second-level distributed memory unit 9, and the next-level signal transceiver 9203 is connected to the previous-level signal transceiver 9202 of the fourth-level distributed memory unit 9.

The interface controller 921 receives the operation instruction b sent by the industrial-personal-computer 11 and sends the operation instruction b to the data synchronization module 922.

The data synchronization module 922 receives the operation request sent by the data synchronization module 922 in the second-level distributed memory unit 9, at this time, the data synchronization module 922 writes the operation instruction b into the operation request (at this time, the operation request includes the operation instruction a and the operation instruction b), and then send the operation request to the fourth-level distributed memory unit 9.

In the fourth-level distributed memory unit 9, the interface signal transceiver 9201 is connected to the I/O control module 2, the previous-level signal transceiver 9202 is connected to the third-level distributed memory unit 9, and the next-level signal transceiver 9203 is not connected.

The interface controller 921 receives the operation instruction c sent by the I/O control module 2 and sends the operation instruction c to the data synchronization module 922.

The data synchronization module 922 receives the operation request sent by the data synchronization module 922 of the third-level distributed memory unit 9, and the data synchronization module 922 writes the operation instruction c into the operation request (at this time, the operation request includes the operation instruction a, operation instruction b and operation instruction c).

The first transmission process of the operation request ends, and the second transmission process of the operation request is started.

In the fourth-level distributed memory unit 9, the data synchronization module 922 sends the operation request to the memory controller 924 through the access arbitration module 923, the memory controller 924 executes all operation instructions included in the operation request, comprising the operation instruction a, the operation instruction b and the operation instruction c, to perform the operations on the target memory 91.

The data synchronization module 922 also returns the operation request to the third-level distributed memory unit 9.

In the third-level distributed memory unit 9, the data synchronization module 922 receives the operation request returned from the fourth-level distributed memory unit 9, and sends the operation request to the memory controller 924 through the access arbitration module 923, the memory controller 924 executes all operation instructions included in the operation request, comprising the operation instruction a, the operation instruction b, and the operation instruction c, to perform the operations on the target memory 91.

The data synchronization module 922 further returns the operation request to the second-level distributed memory unit 9.

In the second-level distributed memory unit 9, the data synchronization module 922 receives the operation request returned from the third-level distributed memory unit 9, and sends the operation request to the memory controller 924 through the access arbitration module 923, the memory controller 924 executes all operation instructions included in the operation request, comprising the operation instruction a, the operation instruction b, and the operation instruction c, to perform the operations on the target memory 91.

The data synchronization module 922 further returns the operation request to the first-level distributed memory unit 9.

In the first-level distributed memory unit 9, the data synchronization module 922 receives the operation request returned from the second-level distributed memory unit 9, and sends the operation request to the memory controller 924 through the access arbitration module 923. the memory controller 924 executes all operation instructions included in the operation request, comprising operation instruction a, operation instruction b, and operation instruction c, to perform the operations on the target memory 91.

At this point, the second transmission process of the operation request ends, and the target memories 91 in the four distributed memory units 9 remain data synchronization.

In this embodiment, a plurality of distributed memory units cascaded are used to cascade a plurality of devices, and data synchronization of target data in the target memories of all devices is achieved in the cascade mode; that is, using the plurality of distributed memory units cascaded to cascade the industrial-personal-computers and the I/O control modules, with only one round of operation requests transmitted back and forth among the plurality of distributed memory units, data synchronization of the target data among all devices (including industrial-personal-computers 11 and the I/O control module 2) can be achieved, which ensures data consistency among devices, deceases data synchronization cycles, and has the advantages of high sharing efficiency, good accuracy and low delay.

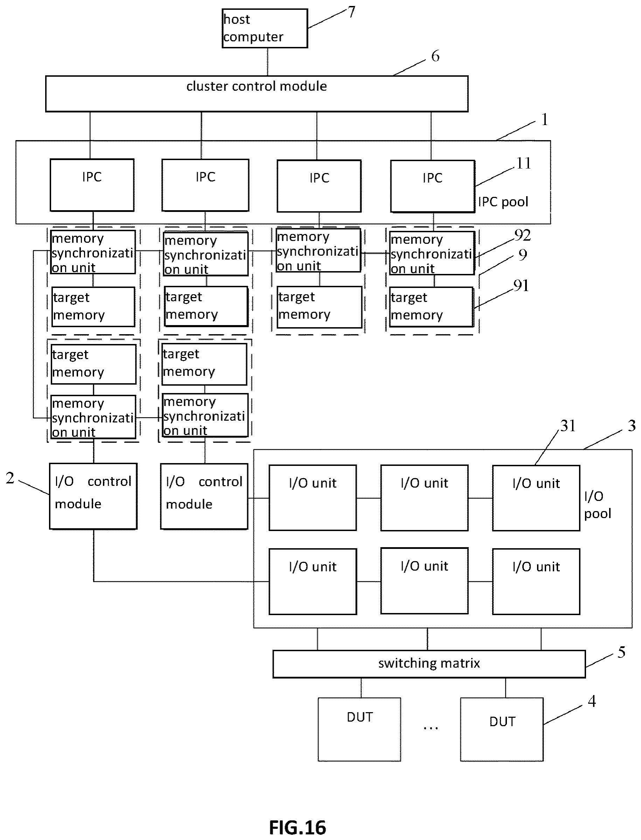

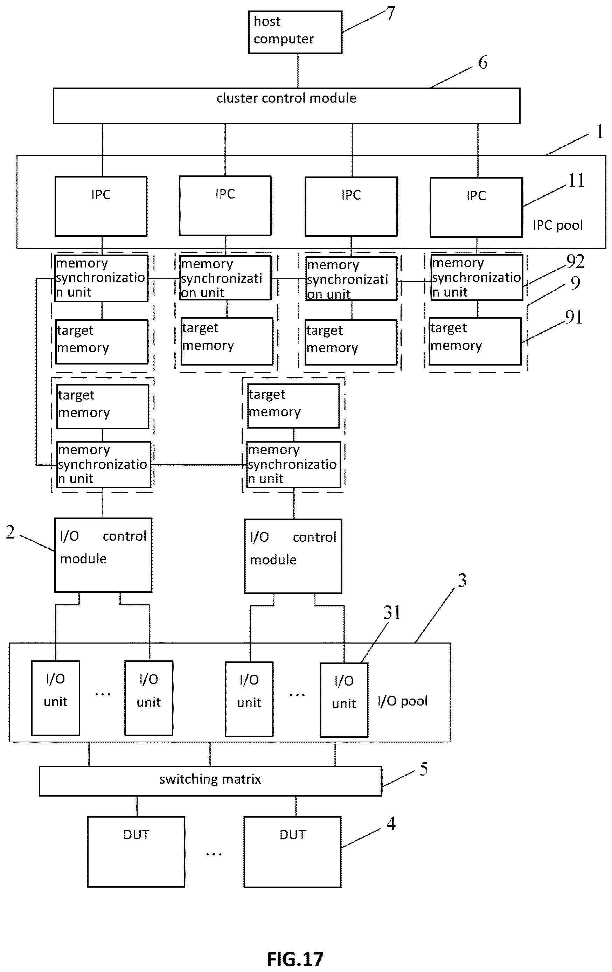

It should be noted that this embodiment can also be applied to a scenario where the number of I/O control modules 2 is multiple, in which each I/O control module 2 and the corresponding I/O units 31 can be connected in cascade manner, as shown in FIG.16, the number of I/O control modules 2 being two and each I/O control module 2 corresponding to three I/O units 31 is taken as an example; or each I/O control module 2 is directly connected to the corresponding I/O units 31 respectively, as shown in FIG. 17, the number of I/O control modules 2 being two and each I/O control module 2 corresponding to a plurality of I/O units 31is taken as an example.

The fifth embodiment of the present application relates to a testing system, compared with the first embodiment, the main difference between it and this embodiment is that this embodiment provides an implementation method of distributed interrupt.

In this embodiment, the industrial-personal-computer 11 and the I/O control module 2 are both used as target devices, and a plurality of target devices are connected to the same memory, that is, a star-shaped connection is used among multiple target devices, and for the specific method of the star-shaped connection of the plurality of target devices, please refer to the third embodiment, which will not be described again here.

Alternatively, each target device is configured with and connected to a corresponding memory, and data among a plurality of memories corresponding to a plurality of target devices is kept synchronized. For example, the plurality of target devices are connected in cascade, and the memory of each target device can be directly configured in the target device, or can be externally connected to the target device; for the cascade connection method among the plurality of target devices, please refer to the fourth embodiment, which will not be described in detail here. In addition, the method of remaining data synchronization among the memories corresponding to the plurality of target devices may also refer to the fourth embodiment, which will not be described in detail here, but not limited to this. The data synchronization among the memories corresponding to the plurality of target devices can also be achieved through the Ethernet connected among the plurality of target devices or through the reflective memory.

It should be noted that the plurality of target devices applied to the implementation method of distributed interrupts in this embodiment may only include multiple industrial-personal-computers 11 that execute the same testing task, or may include the industrial-personal-computers 11 and I/O control module 2 that execute the same testing task.

At least one flag bit is set in the above-mentioned memories connected to the target device. When a plurality of devices are connected to the same memory, at least one flag bit is set in the memory; when a plurality of devices are connected to a plurality of memories, the same flag bit is set in the plurality of memories.

The target device is used to modify the data in the first flag bit of at least one flag bit into a first preset data if a first preset event occurs in the target device during a test process in which the same DUT is tested based on a plurality of target devices, so that at least one first device among the plurality of target devices responds to the first preset data in the first flag bit and performs a first designated processing corresponding to the first preset event.

Specifically, during a testing process in which the same DUT 4 is tested by a plurality of target devices, for any one of the plurality of target devices, when the first preset event occurs, the target device will perform the above-mentioned modifying the data in the first flag bit of at least one flag bit into the first preset data, and the first device among the plurality of target devices is able to trigger an interrupt in response to the first preset data in the first flag bit, and perform the first designated processing corresponding to the preset event, that is, during the testing process, all the first devices can perform the first designated processing according to the same rhythm by modifying the data in the first flag bit; for example, the first device includes all industrial-personal-computers 11 in the plurality of target devices, thereby enabling synchronizing the occurrence of the first preset event in all industrial-personal-computers 11 by writing the first preset data into the first flag bit, so that all industrial-personal-computers 11 perform the first designated processing synchronously, realizing horizontal linkage among the industrial-personal-computers 11, for example, remaining the consistency of working rhythms among a plurality of industrial-personal-computers 11. Wherein the number of the first devices may be one or more, or all target devices may be first devices.
And/Or:
The target device is used to perform a second designated processing corresponding to the second preset data in the second flag bit in response to the second preset data in the second flag bit of the at least one flag bit during testing, the data in the second flag bit are modified into the second preset data by any second device in the plurality of target devices when a second preset event occurs. For example, the target device is used to trigger an interrupt in response to the second preset data in the second flag bit, and perform the second designated processing corresponding to the second preset data in the second flag bit.

Specifically, during a testing process in which the same DUT 4 is tested by a plurality of target devices, any second device in the plurality of target devices modifies the data in the second flag bit of at least one flag bit into the second preset data when a second preset event occurs, for any target device in the plurality of target devices, the target device will detect the data in the second flag bit, when it is detected that the second preset data is written into the second flag bit, the target device triggers an interrupt in response to the second preset data in the second flag bit, and performs a second designated processing corresponding to the second preset data in the second flag bit, that is, any target device in the plurality of target devices may perform the second designated processing in response to the second preset data in the second flag bit written by the second device. Wherein, the target device that responds to the second preset data in the second flag bit written by the second device may be pre-configured, so that the configured target device can respond to the second preset data in the second flag bit written by the second device to synchronously perform the second designated processing, for example, the working rhythm of the configured devices may be adjusted to keep the working rhythm of all the configured devices consistent.

In one example, the target device is also used to restore the data in the second flag bit to the preset initial data after performing the second designated processing corresponding to the second preset data in the second flag bit, the preset initial data is the data in the second flag bit before it is modified into the second preset data. For example, the preset initial data in the second flag bit is 0, when the second preset event occurs, the second device modifies the data in the second flag bit from 0 to the second preset data 1, the current target device may response to the second preset data 1 written into the second flag bit to execute the second designated processing, and restore the data in the second flag bit to the preset initial data 0.

In one example, different preset events correspond to different flag bits in at least one flag bit, in the above content, the target device is used to modify the data in the first flag bit of the at least one flag bit corresponding to the first preset event into the first preset data when the first preset event occurs; the second flag bit is the flag bit corresponding to the second preset event. For example, if the plurality of devices are a plurality of industrial-personal-computers 11, the respective industrial-personal-computers 11 run different simulation models during testing, and the respective industrial-personal-computers 11 are able to trigger different preset events when running different simulation models, thus each industrial-personal-computer 11 can write data into the flag bit corresponding to the preset event when the preset event occurs, to enable other industrial-personal-computers 11 to synchronize occurrence of the preset event in response to the data written into the flag bit, and perform the designated processing.

In one example, the target device is further used to modify the data in the first flag bit of at least one flag bit into the first preset data each time the end of the designated time cycle is detected during testing, so that each industrial-personal-computer in a plurality of target devices tests the DUT based on the rhythm corresponding to the designated time cycle.

Specifically, the target device is configured with a designated time cycle in which the data in the first flag bit is required to be modified, for example, each time cycle is a designated time cycle, or another time cycle starting from the first designated time cycle and spaced to the adjacent previous designated time cycle with a preset number of time cycles is the next designated time cycle, the target device modifies the data in the first flag bit into the first preset data each time it detects the end of the designated time cycle, so that all the industrial-personal-computers in the plurality of target devices test the DUTs in the same designated time cycle, that is, the industrial-personal-computers test the DUTs according to the same rhythm, remaining the consistency of the rhythm and pace among the plurality of industrial-personal-computers. Wherein, the duration of each time cycle can be 1ms, 2ms, etc., without any restriction here.

For example, during testing, the industrial-personal-computers 11 need to call the solving function of the simulation object at a fixed pace, for example, the solving function is called once every 1ms, one target device can be pre-configured to write the first preset data into the first flag bit at every 1ms interval, and the respective industrial-personal-computers 11 are able to detect the first preset data in the first flag bit and trigger an interrupt, so that all industrial-personal-computers 11 can be configured to trigger interrupts every 1ms through the above method, the respective industrial-personal-computers 11 call the solving function of the simulation object first in respond to the triggered interrupt, so that the respective industrial-personal-computers 11 can call the solving function of the same simulation object at the same pace, that is, all industrial-personal-computers 11 can call the solving function of the same simulation object synchronously in respond to the triggered interrupt.

The target device is an industrial-personal-computer, the target device is further used to test the DUT based on the rhythm corresponding to the designated time cycle in response to the second preset data in the second flag bit of at least one flag bit during testing, the data in the second flag bit is modified into the second preset data when any second device in the plurality of devices detects the end of the designated time cycle.

Specifically, the second device is configured with a designated time cycle in which the data in the second flag bit is required to be modified, for example, each time cycle is a designated time cycle, or another time cycle starting from the first designated time cycle and be spacing to the adjacent previous designated time cycle by a preset number of time cycles is the next designated time cycle, the second target device modifies the data in the second flag bit into the second preset data each time it detects the end of the designated time cycle, the current device is an industrial-personal-computer, and the industrial-personal-computer responds to the second preset data in the second flag bit and tests the DUT based on the rhythm corresponding to the designated time cycle, so that the respective industrial-personal-computers in the plurality of target devices test the DUT based on the rhythm corresponding to the same designated time cycle.

In one example, for the simulation models of two industrial-personal-computers 11, taking the simulation model M1 and the simulation model M2 of the vehicle to be simulated as an example, if it is necessary to output simulation signals at different frequencies, for example, the simulation model M1 outputs a signal of simulating vehicle speed and a simulation Model M2 outputs a signal of simulating battery power, the frequency of simulating vehicle speed is to output the signal of simulating vehicle speed once every 1ms, and the frequency of simulating battery power is to output the signal of simulating battery power once every 10ms, then any industrial-personal-computer 11 or I/O control Module 2 can modify the data in the corresponding flag bit each time it detects a 1ms time cycle, so that the simulation model M1 can trigger an interrupt and output the signal of simulating vehicle speed each time it detects the corresponding modification of the corresponding flag bit, the simulation model M2 can trigger an interrupt each time it detects the corresponding modification of the corresponding flag bit, and performs an accumulation, when the accumulation reaches 10 times, it outputs a signal of battery power.

In another example, for the simulation models of two industrial-personal-computers 11, taking the simulation model M4 and the simulation model M5 of the vehicle to be simulated as an example, the simulation model M4 is required to obtain a signal (indicating whether to trigger the brake) of the brake control command fed back by the DUT 4 at a frequency of 1 ms, at the same time, the simulation model M5 is required to output a signal of simulating vehicle speed at a frequency of 2ms; then any industrial-personal-computer 11 or I/O control module 2 can modify the data in the corresponding flag bit each time it detect the signal after a time cycle of 1ms, so that the simulation model M4 can trigger an interrupt each time it detects the corresponding modification of the corresponding flag bit, and obtain a signal of the brake control command, and the simulation model M5 can trigger an interrupt each time it detect the corresponding change of the corresponding flag bit, and accumulate once, when the accumulation reaches 2 times, the signal of simulating vehicle speed is output.

Furthermore, through the above methods, synchronization and coordination of rhythm and pace can be achieved to ensure that the simulation models complete testing reliably and effectively. In comparison, in the prior art, the rhythms among the industrial-personal-computers are independent of each other, the effect of synchronization and cooperation depends on whether the clocks between the industrial-personal-computers 11 are synchronized and the effect of clock synchronization, however, in the above solutions, on the basis of synchronizing data in the memories of a plurality of devices or using the same memory, accurate synchronization and coordination of rhythm and pace can be ensured through horizontal linkage, so that the testing process can more accurately serve the processing of the DUT to meet the testing requirements. At the same time, the embodiments of the present application do not exclude the solutions of introducing clock synchronization.

In another example, when the target device, the first device, and the second device are all industrial-personal-computers, the industrial-personal-computers are used to run the simulation models of the testing, and the preset event generates designated data for the simulation models of the testing run in the industrial-personal-computer (for example, first designated data, second designated data).

The target device is used to modify the data in the first flag bit of at least one flag bit into the first preset data if the first simulation model run in the target device generates first designated data during testing, so that the second simulation model run in the first device performs processing related to the designated data to test the DUT; the first designated data includes: first data indicating that the first simulation model enters the designated state, and/or: second data calculated by the first simulation model that needs to be sent to the DUT.

For example, the industrial-personal-computer A is used to run a testing simulation model X, and the industrial-personal-computer B is used to run a testing simulation model Y, during testing, when running the testing model X and outputting designated data D, the industrial-personal-computer A determines that the set running time has been reached and modifies the data in the first flag bit of at least one flag bit into the first preset data. The industrial-personal-computer B responds to the first preset data in the first flag bit, triggers an interrupt, and runs the testing simulation model Y to test the DUT.

The target device is further used to respond to the second preset data in the second flag bit of the at least one flag bit, trigger the running third simulation model to perform processing associated with the second designated data, and test the DUT; the data in the second flag bit is modified into the second preset data when the fourth simulation model in the second device generates a second designated data, the second designated data includes: third data indicating that the fourth simulation model enters the designated state, and/or: the fourth data calculated by the fourth simulation model that needs to be sent to the DUT. That is, during testing, any industrial-personal-computer in the plurality of target devices will modify the data in the second flag bit into the second preset data when the simulation model running the testing outputs the designated data, and the target device will respond to the second preset data in the second flag bit to run the simulation model of testing to test the DUT.

In the above example, the designated state may, for example, refer to a state in which the corresponding simulation model starts to operate, a state in which it stops operating, a state in which a certain step of the test case is processed, a state in which a certain parameter starts to be calculated, and a state in which a certain parameter is calculated, and a state in which a certain computing goal is completed, etc.

In one example, the target device is used to detect the data in the target flag bit associated with the target device in at least one flag bit during testing, if it is detected that the second flag bit in the target flag bit is modified into the second preset data, execute the second designated processing corresponding to the second preset data in the second flag bit. That is, the target flag bits on which each target device focuses are different, the target flag bit associated with each target device may be one or more, for each target device, it will detect whether the target flag bit associated with itself is written the second preset data, and when it is detected that the second flag bit in the target flag bit associated with itself is written the second preset data, perform the second designated processing, and delete the second preset data written into the second flag bit and restore the data in the second flag bit to the preset initial data.

Thus, the respective target devices in the plurality of target devices may be configured to be associated with different target flag bits, that is, the respective target devices may be configured to only respond to data modifications in the associated target flag bits, so that target device clusters executing different testing tasks are configured to work according to different rhythms and paces.

In this embodiment, with the flag bits set in the memory, any one of the plurality of target devices can write data into the flag bits when a preset event occurs, so that the plurality of target devices respond to the data written into flag bits, furthermore, on the basis that the data in the memories of plurality of target devices are synchronized or the same memory is used, the present application uses the data written into the flag bits as the medium for interaction between target devices in the HIL system, achieving horizontal linkage among the plurality of target devices.

The preferred embodiments of the present application have been described in detail above, but it should be understood that aspects of the embodiments can be modified if desired to employ aspects, features and concepts from various patents, applications and publications to provide additional embodiments.

These and other changes can be made to the embodiments in view of the above detailed description. In general, in the claims, the terms used should not be considered as limiting to the specific embodiments disclosed in the specification and claims, but should be understood to include all possible embodiments along with all equivalent scopes enjoyed by these claims.

## Claims

1. A testing system, wherein the testing system is a HIL system, comprising: an industrial-personal-computer pool, at least one I/O control module and an I/O pool; the industrial-personal-computer pool comprises a plurality of industrial-personal-computers, and the I/O pool comprises at least one I/O unit;
the I/O control module is used to transmit target data between K industrial-personal-computers in the industrial-personal-computer pool and L I/O units in the I/O pool; where K and L are any integer greater than or equal to 1;
the I/O unit is used to transmit the target data or the data obtained based on the target data between the I/O control module and DUTs.

2. The testing system according to claim 1, wherein any one of the industrial-personal-computers serves as a cluster control module, or the testing system further comprises: a cluster control module;
the cluster control module is used to determine data transmission relationships between K industrial-personal-computers in the industrial-personal-computer pool and L I/O units in the I/O pool that execute a current first testing task;
the I/O control module is used to transmit target data between the K industrial-personal-computers and the L I/O units based on the data transmission relationships between the K industrial-personal-computers in the industrial-personal-computer pool and the L I/O units in the I/O pool;
the cluster control module is further used to send task information of the first testing task to the K industrial-personal-computers;
the industrial-personal-computers are used to generate downlink information to be sent to a first DUT based on the task information of the first testing task.

3. The testing system according to claim 2, wherein each of the industrial-personal-computers is configured with at least one CPU;
the cluster control module is further used to determine testing requirement information of the first testing task, the testing requirement information is at least used to characterize quantity information of the CPUs and the quantity information of the I/O units required to execute the first testing task;
the cluster control module is used to select N CPUs from the CPUs currently in an idle state and L I/O units from the I/O units currently in an idle state based on the testing requirement information, where N is any integer greater than or equal to 1;
each of the K industrial-personal-computers comprises at least one CPU of the N CPUs.

4. The testing system according to claim 2, wherein the testing system further comprises: a switching matrix connected between the I/O units and the first DUTs; the switching matrix comprises: at least one first port and at least one second port; the first ports are connected to the I/O units respectively, and the second ports are connected to the first DUTs respectively;
the cluster control module is further used to configure connection channels between the first ports connected to the L I/O units and the second ports connected to the first DUTs in the switching matrix, and establish communication connections between the L I/O units and the first DUTs;
the switching matrix is used to transmit the target data between the L I/O units and the first DUTs through the connection channels.

5. The testing system according to claim 3, wherein the cluster control module is further used to:
before the execution of the first testing task is completed, based on the testing requirement information of another second testing task, use J CPUs among the CPUs of the plurality of industrial-personal-computers and M I/O units among the plurality of I/O units to execute the second testing task to test another second DUT, so as to enable interaction between the second DUT and the J CPUs through the M I/O units; where J and M are both any integers greater than or equal to 1; wherein the J CPUs and the N CPUs are different CPUs among the CPUs of the plurality of industrial-personal-computers, and the L I/O units and the M I/O units are different I/O units among the plurality of I/O units;
and/or:
after the N CPUs and the L I/O units executing the first testing task is released, based on the testing requirement information of another third testing task, select Z CPUs from the CPUs currently in the idle state, select T I/O units from the I/O units currently in an idle state, and use the Z CPUs and the T I/O units to execute the third testing task to test a third DUT, so as to enable interaction between the third DUT and the Z CPUs through the T I/O units; where both Z and T are any integers greater than or equal to 1; wherein the Z CPUs and the N CPUs have overlapping CPUs, and/or the L I/O units and the T I/O units have overlapping I/O units.

6. The testing system according to claim 1, wherein the testing system further comprises: a shared memory unit; the shared memory unit includes a shared memory and a memory operating unit, the industrial-personal-computers are directly or indirectly connected to the memory operating unit, and the memory operating unit is communicatively connected to the I/O control module, the memory operating unit is also connected to the shared memory;
the memory operating unit is used to, when receiving an operation instruction for operating the shared memory from any designated device in the industrial-personal-computers and the I/O control module, execute the received operation instruction, to write at least part of the target data into the shared memory; or read at least part of the target data from the shared memory, and feed the read target data back to the designated device.

7. The testing system according to claim 1, wherein the testing system further comprises: a plurality of distributed memory units, each of which comprises a target memory and a memory synchronization unit; the industrial-personal-computers correspond one-to-one with the distributed memory units, and the industrial-personal-computers are connected to the memory synchronization units of the corresponding distributed memory units, the I/O control module corresponds to one of the distributed memory units, and the I/O control module is connected to the memory synchronization unit of the corresponding distributed memory unit, the plurality of distributed memory units are cascaded in sequence;
the target data transmitted between the I/O unit and the industrial-personal-computer is transmitted based on the operation result of the memory synchronization unit on the target memory, and data in all the target memories is kept synchronized.

8. The testing system according to claim 7, wherein the memory synchronization unit is used to, when receiving an operation request in a first transmission process, if the distributed memory unit to which it belongs needs to perform a target operation on the target memory, write operation instructions of the target operation into the operation request, and transmit the operation request to the next-level distributed memory unit; the first transmission process refer to a process in which the operation request is transmitted from the first distributed memory unit of the plurality of distributed memory units cascaded to the last distributed memory unit in sequence; the target operation is an operation of writing at least part of the target data into the target memory;
the memory synchronization unit is used to operate the target memory of the distributed memory unit to which it belongs based on all operation instructions contained in the operation request when receiving the operation request in a second transmission process, and transmit the operation request to the previous-level distributed memory unit; the second transmission process refer to a process in which the operation request is transmitted from the last distributed memory unit to the first distributed memory unit in sequence after the first transmission process, or a process in which when the plurality of distributed memory units are connected in a closed loop, the operation request is transmitted from the first distributed memory unit to the last distributed memory unit in sequence again;
after the second transmission process is completed, data in the target memories in the plurality of distributed memory units is kept synchronized, so that at least part of the target data is synchronously written into the target memories of the distributed memory units.

9. The testing system according to claim 1, wherein the industrial-personal-computer and the I/O control module are both target devices, and a plurality of target devices are connected to the same memory; or each of the target devices is configured with and connected to a corresponding memory, and data among a plurality of memories corresponding to the plurality of target devices is kept synchronized; the memory is provided with at least one flag bit;
the target device is used to modify data in a first flag bit of the at least one flag bit into a first preset data if a first preset event occurs in the target device during a test process in which the same DUT is tested based on a plurality of target devices, so that at least one first device among the plurality of target devices responds to the first preset data in the first flag bit and executes a first designated processing corresponding to the first preset event;
and/or:
the target device is used to respond to a second preset data in a second flag bit of the at least one flag bit and execute a second designated process corresponding to the second preset data in the second flag bit during the test process, the data in the second flag bit is modified into the second preset data by any second device among the plurality of target devices when a second preset event occurs.

10. The testing system according to claim 9, wherein the target device is further used to modify the data in the first flag bit of the at least one flag bit into the first preset data each time the end of a designated time cycle is detected during the test process, so as to enable each industrial-personal-computer in the plurality of target devices to test the DUT based on a rhythm corresponding to the designated time cycle;
the target device is an industrial-personal-computer, and the target device is further used to respond to the second preset data in the second flag bit of the at least one flag bit, and test the DUT based on the rhythm corresponding to the designated time cycle during the test process, and the data of the second flag bit is modified into the second preset data by any second device among the plurality of devices when detecting the end of the designated time cycle.

11. The testing system according to claim 9, wherein the target device, the first device, and the second device are all the industrial-personal-computers, and the industrial-personal-computers are used to run the simulation model of testing;
the target device is used to modify the data in the first flag bit of the at least one flag bit into a first preset data if the first simulation model run in the target device generates a first designated data during the test process, so as to enable the second simulation model run in the first device to perform processing associated with the first designated data to test the DUT; the first designated data includes: first data indicating that the first simulation model enters a designated state, and/or: second data calculated by the first simulation model that needs to be sent to the DUT;
the target device is further used to response to the second preset data in the second flag bit of the at least one flag bit, trigger a running third simulation model to perform processing associated with a second designated data to test the DUT; the data in the second flag bit is modified into the second preset data when a fourth simulation model in the second device generates the second designated data, and the second designated data includes: third data indicating that the fourth simulation model enters a designated state, and/or: fourth data calculated by the fourth simulation model that needs to be sent to the DUT.

12. The testing system according to claim 9, wherein the target device is used to modify the data in the first flag bit of the at least one flag bit into the first preset data if a first preset event occurs in the target device during a testing process in which the same DUT is tested based on the plurality of target devices, so as to enable at least one first device among the plurality of target devices to trigger an interrupt in response to the first preset data in the first flag bit, and execute the first designated processing corresponding to the first preset event;
the target device is used to trigger an interrupt in response to the second preset data in the second flag bit, and execute the second designated processing corresponding to the second preset data in the second flag bit.
